(19) Europäisches Patentamt / European Patent Office / Office européen des brevets

(11) EP 2 738 740 B1

(12) **EUROPEAN PATENT SPECIFICATION**

(45) Date of publication and mention
of the grant of the patent:
**01.03.2017 Bulletin 2017/09**

(51) Int Cl.:
*G06T 7/00* *(2017.01)*     *H04N 13/02* *(2006.01)*

(21) Application number: **13186379.7**

(22) Date of filing: **27.09.2013**

(54) **Image processing device and image processing method**

Bildverarbeitungsvorrichtung und Bildverarbeitungsverfahren

Procédé et dispositif de traitement d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2012 JP 2012262772**

(43) Date of publication of application:
**04.06.2014 Bulletin 2014/23**

(73) Proprietor: **FUJITSU LIMITED
Kawasaki-shi,
Kanagawa 211-8588 (JP)**

(72) Inventors:
• **Kanetake, Jun
Kanagawa, 211-8588 (JP)**
• **Nakayama, Osafumi
Kanagawa, 211-8588 (JP)**

(74) Representative: **Hoffmann Eitle
Patent- und Rechtsanwälte PartmbB
Arabellastraße 30
81925 München (DE)**

(56) References cited:
**EP-A2- 2 436 577**     **US-A1- 2009 243 889**

• **FINTZEL K ET AL: "3D parking assistant system",
INTELLIGENT VEHICLES SYMPOSIUM, 2004
IEEE PARMA, ITALY JUNE 14-17, 2004,
PISCATAWAY, NJ, USA,IEEE, 14 June 2004
(2004-06-14), pages 881-886, XP010727764, DOI:
10.1109/IVS.2004.1336501 ISBN:
978-0-7803-8310-4**

**Description**

FIELD

The embodiments discussed herein are related to an image processing device and an image processing method for processing images that have been taken.

BACKGROUND

In recent years, there has been an on-vehicle image processing system for attaching four wide angle cameras to the front, back, left, and right sides of a self-vehicle, measuring the three-dimensional distances to still objects present in the surroundings, indicating the shapes and the positional relationships of parked vehicles in the surroundings, and performing vehicle operation support when the parking the vehicle.

In this on-vehicle image processing system, it is important to measure the distance from a moving body to an object. As a technology for measuring the distance, for example, there is a technology of improving the measurement precision by extracting only feature points having a distance error that is less than or equal to a threshold (see, for example, Patent Document 1).

Patent Document 1: Japanese Laid-Open Patent Publication No. 2007-322357.

A 3D parking assistant system is disclosed in K. Fintzel et al., "3D Parking Assistant System", 2004 IEEE Intelligent vehicles symposium, pages 881-886, June 14th, 2004. The system provides the driver with a 3D representation of the scene surrounding his vehicle.

However, with the conventional technology it is not possible to generate the object shape of the object whose distance error to a feature point is less than or equal to a threshold. For example, there are plural objects in an image, and an object located in front of the moving body is referred to as object A, and an object located behind object A is referred to as object B. In this case, when the moving body is rotated and inserted in between object A and object B, the moving body rotates without coming near object B. Therefore, the distance error to a feature point to object B does not become less than or equal to a threshold, and the object shape of object B is not generated.

SUMMARY

Accordingly, it is an object in one aspect of the invention to provide an image processing apparatus according to claim 1 and an image processing method according to claim 6.

BRIEF DESCRIPTION OF THE DRAWINGS

FIG. 1 illustrates a measuring state in the comparative example;
FIG. 2 illustrates an example of a process of generating an object shape according to the comparative example;
FIG. 3 illustrates an example of feature points in a case of rotational parking;
FIG. 4 illustrates the incomplete parts in object B;
FIG. 5 illustrates the problems that arise when the selection threshold is alleviated;
FIG. 6 is a block diagram of the configuration of an image processing system according to a first embodiment;
FIG. 7 is a functional block diagram of an image processing device according to the first embodiment;
FIG. 8 illustrates examples of information held in the element in the edge list;
FIG. 9 is a flowchart of an example of a feature point extracting process according to the first embodiment;
FIG. 10 illustrates examples of information held in the element in the registered list;
FIG. 11 is a flowchart of an example of a matching process according to the first embodiment;
FIGS. 12A and 12B illustrate the error of the three-dimensional position according to the distance between the camera and the object;
FIG. 13 illustrates the positional relationship between the object and the camera at two time points;
FIG. 14 is a flowchart of an example of a three-dimensional position calculating process and a precision calculating process according to the first embodiment;
FIG. 15 is a flowchart of an example of a process of registering feature points according to the first embodiment;
FIG. 16 illustrates the transition of the distance from the camera to the feature point and the precision in a case where the moving body is moving straight ahead;
FIG. 17 illustrates the transition of the distance from the camera to the feature point and the precision in a case where the moving body moves straight ahead while rotating;

FIG. 18 is a flowchart of an example of a precision prediction process according to the first embodiment;

FIG. 19 is a flowchart of an example of a precision distribution determining process of a feature point according to the first embodiment;

FIG. 20 is a flowchart of an example of a process of applying an initial label value according to the first embodiment;

FIG. 21 illustrates an example of information held in the element in the connection destination list;

FIG. 22 is a flowchart of an example of a process of organizing label numbers according to the first embodiment;

FIG. 23 illustrates an example of information held in the element in the final connection destination list;

FIG. 24 is a flowchart of an example of an object number determining process according to the first embodiment;

FIG. 25 illustrates examples of information held in the element in the object list;

FIG. 26 is a flowchart of an example of a process of setting a selection threshold according to the first embodiment;

FIG. 27 illustrates an example of information held in the element in the histogram list according to the first embodiment;

FIG. 28 illustrates an example of information held in the element in the selection threshold list;

FIG. 29 is a flowchart of an example of a process of selecting a feature point according to the first embodiment;

FIG. 30 is a functional block diagram of an image processing device according to a second embodiment;

FIG. 31 illustrates examples of information held in the element of the object information according to the second embodiment;

FIG. 32 is a flowchart of an example of a distance calculating process for each object according to the second embodiment;

FIG. 33 is a flowchart of an example of a process of selecting a feature point according to the second embodiment; and

FIG. 34 is a functional block diagram of an image processing device according to the third embodiment.

## DESCRIPTION OF EMBODIMENTS

First, a description is given of a comparative example of generating an object shape. In the comparative example, the surface shape of a surrounding object is generated by the following procedure, by using an image taken while moving the moving body. In the following description, a vehicle is taken as an example of the moving body.

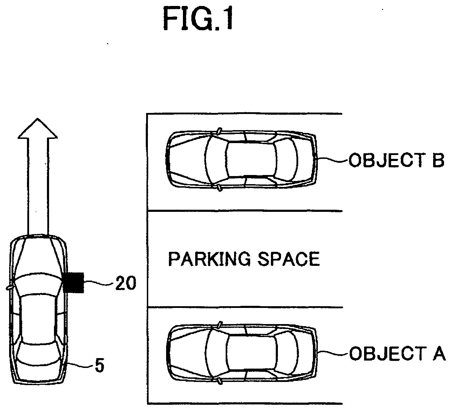

FIG. 1 illustrates a measuring state in the comparative example. In the example of FIG. 1, it is assumed that a vehicle 5 will be parked in a parking space between object A and object B. In this case, a camera 20 installed in the vehicle 5 is used to take images of the surroundings while the vehicle 5 is moving, the taken images are used to generate an object shape, and the object shape is presented to the driver.

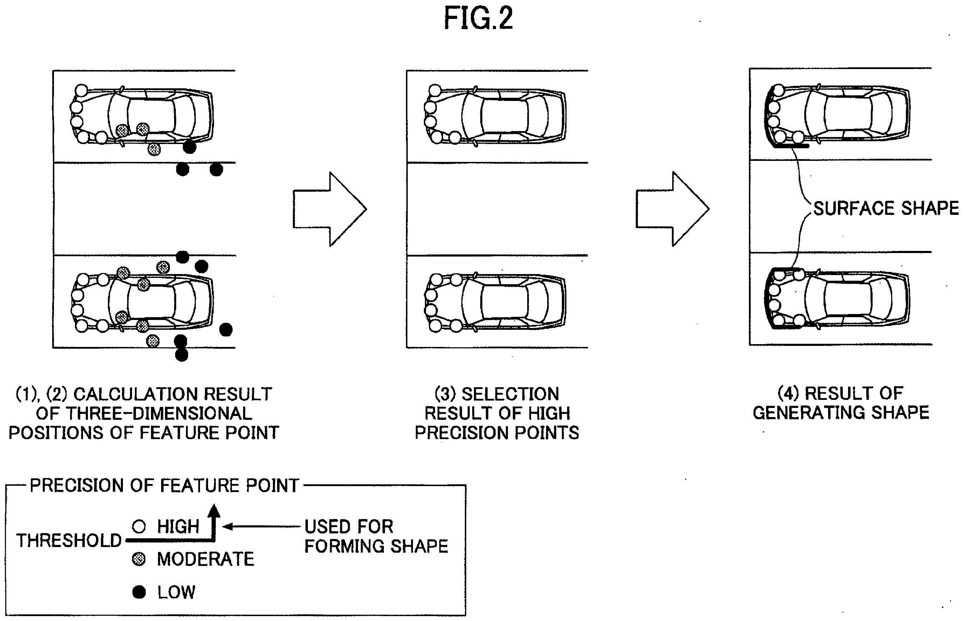

FIG. 2 illustrates an example of a process of generating an object shape according to the comparative example.

(1) Three-dimensional positions of feature points on a surrounding object are measured by a motion stereo method with one camera 20.

(2) For each feature point, information having the highest measurement precision is saved, among the thee-dimensional positions that have been obtained during the past movements.

(3) Only feature points having a measurement precision of greater than or equal to a certain level are selected from a group of three-dimensional position data items that are saved.

(4) Only three-dimensional position information having high precision is used to generate a surface shape of a surrounding object.

A motion stereo method is a method of tracking still objects in images in time series, and defining the relative positions (movement amount) of the imaging positions of an object and the camera (vehicle) at two time points (present time and past time), to calculate the three-dimensional position from the principle of trigonometrical survey. In the principle of a motion stereo method, as the distance between the camera 20 and the object becomes shorter, the precision of the three-dimensional position will increase, and as the distance between the camera 20 and the object becomes longer, the precision of the three-dimensional position will decrease.

In the above comparative example, depending on the movement path of the vehicle, there may be cases where the distance between the vehicle and the target (object) is not sufficiently close, the precision of the three-dimensional position with respect to the feature point on the object becomes less than or equal to a threshold, this three-dimensional position is excluded from the target of generating the shape, and the object will have an incomplete shape.

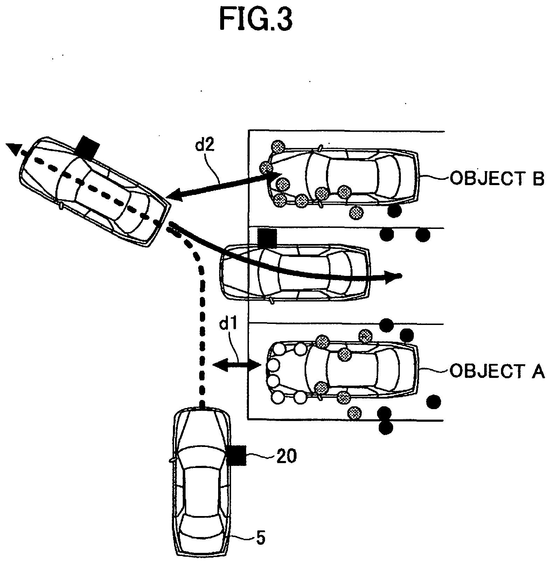

For example, FIG. 3 illustrates an example of feature points in a case of rotational parking. In the example of FIG. 3, there are parked vehicles on both sides of the parking space. In the following, the parked vehicle in front of the parking space is referred to as object A, and the parked vehicle behind the parking space is referred to as object B.

In this case, as typical reverse parking, a scenario where (i) the vehicle approaches the parking space → (ii) the vehicle rotates to perform reverse parking near the parking space → (iii) the vehicle performs reverse parking toward the parking space, is considered.

As to the feature points of object A, the precision of the three-dimensional positions is high because the distance between the camera 20 and the object A becomes short when the vehicle approaches the parking space at (i) described above. Meanwhile, as to the feature points of object B, when the vehicle rotates to perform reverse parking near the parking space at (ii) described above, the distance between the camera 20 and the object B becomes long. Therefore, the precision of the three-dimensional position of the object B becomes low in the case of (ii).

As a result, the feature points having high precision are selected at (3), and therefore the shape of the object A is generated. However, the feature points of the object B with low precision are not selected, and therefore the shape of the object B will be incomplete.

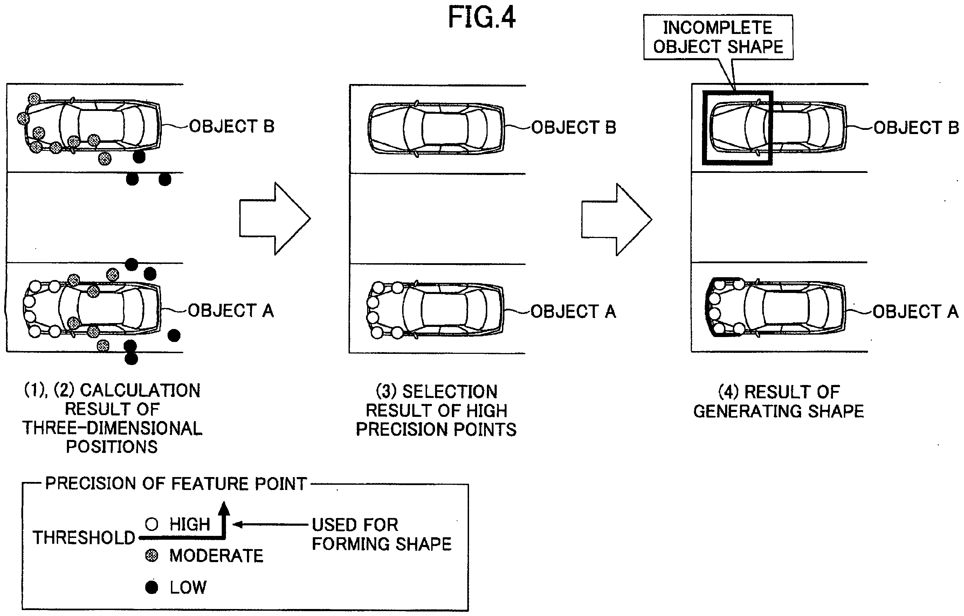

FIG. 4 illustrates the incomplete parts in the object B. In the example of FIG. 4, as to the feature points of object B, the moving body moved away before sufficiently approaching object B, and therefore the precision of the three-dimensional positions on the object B does not become high. Therefore, as to object B including feature points having a precision of less than or equal to a threshold, the object shape is not properly generated, and the object shape becomes incomplete.

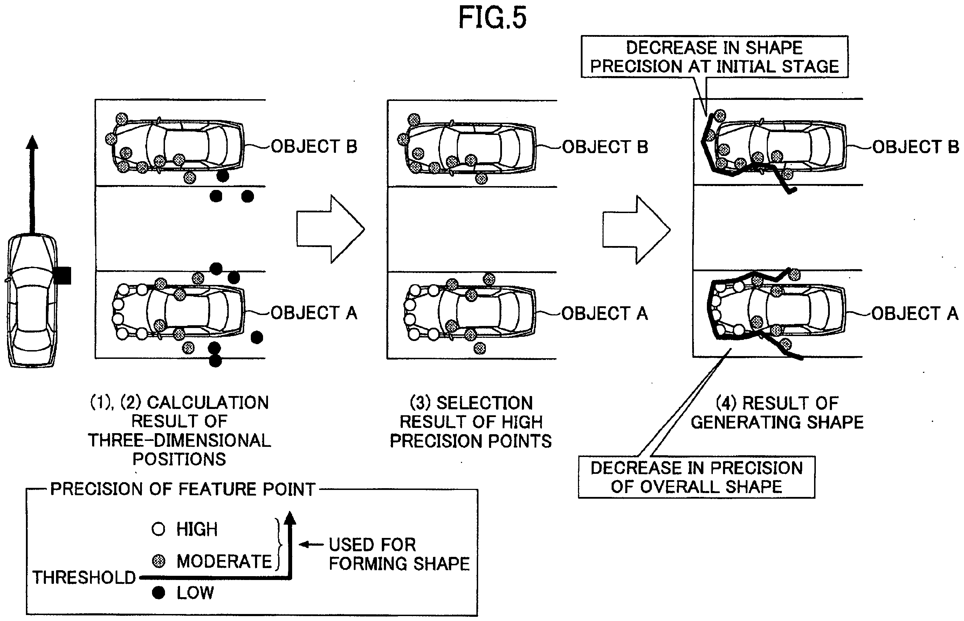

Furthermore, in order to prevent the object shape from becoming incomplete, a method of alleviating the threshold for selecting feature points for generating the shape may be considered. However, if the threshold for selecting feature points is alleviated, problems arise as illustrate in FIG. 5.

FIG. 5 illustrates the problems that arise when the selection threshold is alleviated. As illustrated in FIG. 5, at an initial stage where the precision is low, the feature points of the three-dimensional positions are used for generating the shape, and therefore the shape precision is low at the initial stage. Furthermore, not only the feature points having high precision, but also the feature points having low precision are used for forming the shape, and therefore the shape of the object with high precision becomes deformed.

As described above, in the process of the comparative example, the object shape is not appropriately generated. In the following, embodiments for solving the above problem are described with reference to attached drawings.

First embodiment

First, a description is given of a configuration of an image processing system 1 installed in a moving body according to a first embodiment. The image processing system 1 is applicable to, for example, an on-vehicle camera system.

Configuration

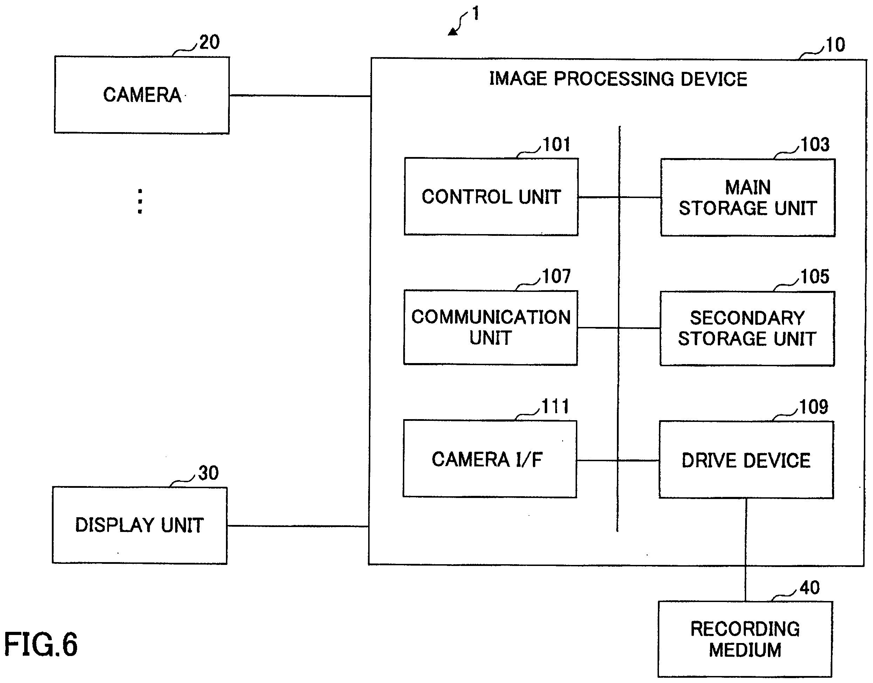

FIG. 6 is a block diagram of the configuration of the image processing system 1 according to the first embodiment. The image processing system 1 includes an image processing device 10, a camera 20, and a display unit 30. The image processing system 1 may include plural cameras.

The image processing device 10 acquires an image from the camera 20 installed in the moving body, measures the distance from the acquired image to an object, and performs parking support for the moving body.

Furthermore, the image processing device 10 includes a control unit 101, a main storage unit 103, a secondary storage unit 105, a communication unit 107, a drive device 109, and a camera I/F 111. These units are connected to each other via a data bus so that data communication is possible.

The control unit 101 is a CPU (Central Processing Unit) for controlling the respective devices and for performing calculation and processing of data in a computer. Furthermore, the control unit 101 is a processor for executing programs stored in the main storage unit 103 and the secondary storage unit 105. The control unit 101 receives data from an input device and a storage device, performs calculation and processing of the received data, and outputs the data to an output device and a storage device. The program is, for example, an image processing program including a distance measuring process.

The main storage unit 103 is, for example, a ROM (Read-Only Memory) or a RAM (Random Access Memory). The main storage unit 103 is a storage device that stores or temporarily saves programs executed by the control unit 101 such as OS which is the basic software and application software, and data.

The secondary storage unit 105 is, for example, a HDD (Hard Disk Drive), and is a storage device for storing data relevant to application software. The secondary storage unit 105 stores, for example, images acquired from the camera 20.

The communication unit 107 performs data communication with peripheral devices in a wired or wireless manner. The communication unit 107 acquires images, for example via a network, and stores the acquired images in the secondary storage unit 105.

The drive device 109 may read image processing programs for executing processes described below from a recording medium 40, for example, a flexible disk or a CD (Compact Disc), and install the programs in a storage device.

Furthermore, an imaging control program is stored in the recording medium 40, and the program stored in the recording medium 40 is installed in the image processing device 10 via the drive device 109. The imaging control program that has been installed is executable by the image processing device 10.

The camera I/F 111 is an interface for acquiring images from the camera 20. The camera I/F 111 saves the acquired images in the secondary storage unit 105 or outputs the acquired images to the control unit 101.

The camera 20 is, for example, one of a front camera, a left camera, a right camera, and a back camera installed in the vehicle. The camera 20 takes an image of the surroundings and inputs the images in the image processing device 10 via the camera I/F 111.

The display unit 30 displays the output image generated by the image processing device 10. For example, the display unit 30 displays a bird's-eye image.

Functions

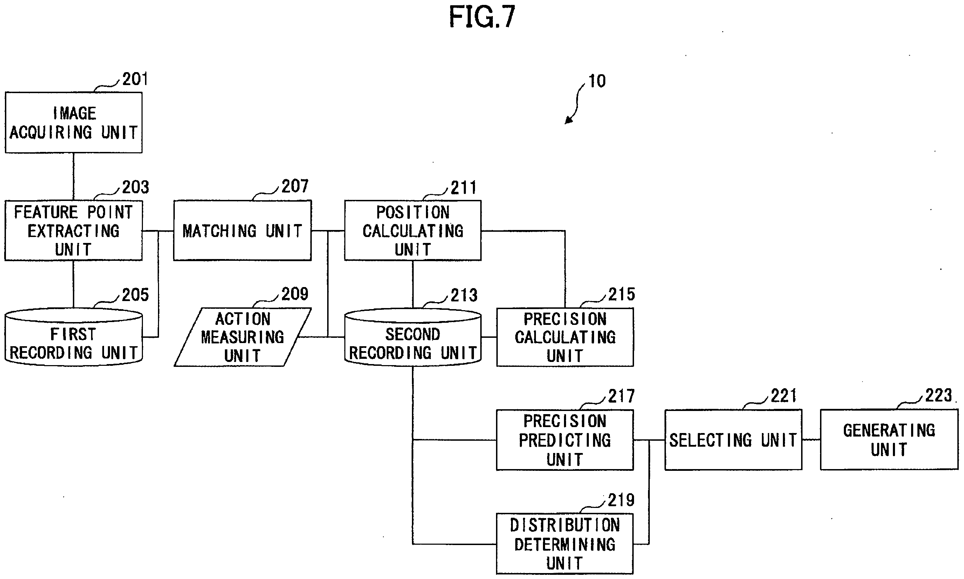

FIG. 7 is a functional block diagram of the image processing device 10 according to the first embodiment. The image processing device 10 includes an image acquiring unit 201, a feature point extracting unit 203, a first recording unit 205, a matching unit 207, an action measuring unit 209, a position calculating unit 211, a second recording unit 213, a precision calculating unit 215, a precision predicting unit 217, a distribution determining unit 219, a selecting unit 221, and a generating unit 223.

Units other than the image acquiring unit 201, the first recording unit 205, and the second recording unit 213 are functions that become executable by being loaded in the main storage unit 103, as an image processing program is executed by the control unit 101, for example.

The image acquiring unit 201 is realized by, for example, the camera I/F 111. The first recording unit 205 and the second recording unit 213 are realized by, for example, the secondary storage unit 105 and the main storage unit 103.

The image acquiring unit 201 acquires an image from the camera 20 installed in the moving body. For example, the image acquiring unit 201 acquires an image taken by a corresponding camera 20. For example, the camera 20 takes an image while the moving body is moving.

The feature point extracting unit 203 extracts feature points from the images being taken. For example, the feature point extracting unit 203 extracts a group of edge points (feature points) from the input image, records the edge points in the first recording unit 205, and outputs the edge points to the matching unit 207.

The first recording unit 205 records the feature points extracted by the feature point extracting unit 203 in association with images in time series.

The matching unit 207 performs a matching process on the feature points extracted from images of at least two time points. For example, the matching unit 207 matches (cross-checks) the group of edge points obtained from the feature point extracting unit 203 and a past group of edge points recorded in time series in the first recording unit 205. The matching unit 207 outputs the group of edge points of two time points that have been found to match (successfully match), to the position calculating unit 211.

The action measuring unit 209 may obtain the vehicle speed and the steering angle by using the images acquired from the camera 20, or sensors may be provided in the moving body, and the vehicle speed and the steering angle may be measured with the sensors. The action measuring unit 209 outputs the movement amount of the moving body (or camera 20) that has been obtained, to the position calculating unit 211. Furthermore, the action measuring unit 209 records the actions (movement amount and movement direction) of the moving body in the second recording unit 213.

The position calculating unit 211 calculates the three-dimensional positions of the feature points based on the positions of the feature points matched by the matching unit 207 and the movement amount of the moving body obtained by the action measuring unit 209. The position calculating unit 211 records the obtained three-dimensional positions of the feature points in the second recording unit 213, and outputs the three-dimensional positions to the precision calculating unit 215.

The second recording unit 213 records the three-dimensional positions of the feature points that have been found to match in association with each of the images in time series. Furthermore, the second recording unit 213 records information of the three-dimensional position having the highest precision for each feature point, with respect to the feature points calculated by the precision calculating unit 215. Furthermore, the second recording unit 213 records the movement of the moving body input from the action measuring unit 209.

The precision calculating unit 215 calculates the errors of three-dimensional positions of feature points, and records the errors in the second recording unit 213. The precision calculating unit 215 compares the calculated errors of three-dimensional positions of feature points with the errors of three-dimensional positions of feature points recorded in the second recording unit 213, and records the information of the three-dimensional position having the highest precision, in the second recording unit 213.

The precision predicting unit 217 predicts the precision of three-dimensional positions of feature points based on the movement of the moving body. For example, the precision predicting unit 217 predicts the precision of the future three-dimensional positions of feature points from the three-dimensional positions of the feature points and the actions of the vehicle. The precision predicting unit 217 outputs the predicted precision of three-dimensional positions to the selecting unit 221.

The distribution determining unit 219 detects an object from an image, and sets a threshold for each object based on the distribution of precision of feature points generated for each object. For example, the distribution determining unit 219 detects an object based on a group of edge points (feature points), and calculates the distribution of precision of feature points included in each object. The distribution determining unit 219 sets the threshold of each object based on the distribution shape of the precision distribution. The distribution determining unit 219 outputs the set threshold of each object to the selecting unit 221.

The selecting unit 221 selects, for each object, the feature point having a higher precision than the set threshold. For example, the selecting unit 221 selects the feature points to be used for generating an object shape based on the prediction result obtained by the precision predicting unit 217 and the threshold obtained from the distribution determining unit 219. The selecting unit 221 outputs the feature points selected for each object to the generating unit 223.

The generating unit 223 generates an object shape with the use of the feature points selected at the selecting unit 221, and outputs the object shape. The first recording unit 205 and the second recording unit 213 are described as different units as a matter of convenience; however, these units may constitute a single recording unit in which the recording area is divided.

Process of each unit

Next, a detailed description is given of the processing contents of each unit according to the first embodiment.

Image acquiring process

The image acquiring unit 201 acquires images from the camera 20 installed in the moving body. The image acquiring unit 201 converts the color image into a monochrome grayscale image according to need, and outputs the monochrome grayscale image to the feature point extracting unit 203.

Feature point extracting process

The feature point extracting unit 203 extracts a group of edge points from the input image. The feature points (edges) are positions where the brightness rapidly changes in the acquired image. As a method of extracting feature points, there is a typical filter process such as Sobel filtering. If the value (edge intensity) of a point after applying a filter is greater than or equal to a threshold, the feature point extracting unit 203 extracts the point as a feature point, and outputs the extraction result to the matching unit 207 and the first recording unit 205. As the threshold, an appropriate value obtained by experiments may be set in advance.

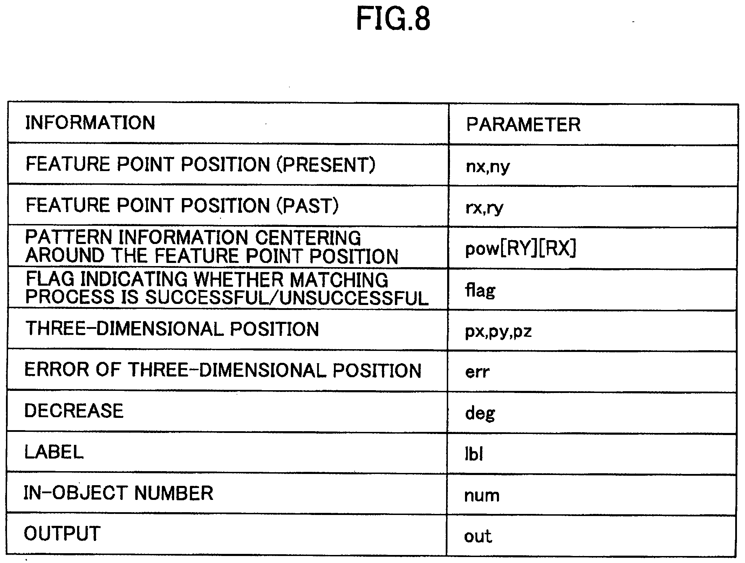

The feature point extracting unit 203 generates an edge list by extracting feature points. The feature point extracting unit 203 calculates the edge intensity of each pixel. When there is a location where the edge intensity is greater than or equal to the threshold, this location is added to the edge list (list_edge). The edge list (list_edge) is an assembly of elements e[i] having the information illustrated in FIG. 8. Furthermore, before the feature point extracting process, the edge list (list_edge) is initialized (number of elements=0).

FIG. 8 illustrates examples of information held in the element in the edge list. As illustrated in FIG. 8, the element e[i] includes a feature point position (present) (nx, ny), a feature point position (past) (rx, ry), pattern information centering around the feature point position (hereinafter, also referred to as "surrounding pattern information") (pow[RY] [RX]), a flag indicating whether the matching process is successful or unsuccessful (flag), a three-dimensional position (px, py, pz), an error of the three-dimensional position (err), a decrease indicating the decrease in the precision (deg), a label used for detecting an object (lbl), an in-object number (num), and output indicating whether to use as an object shape (out).

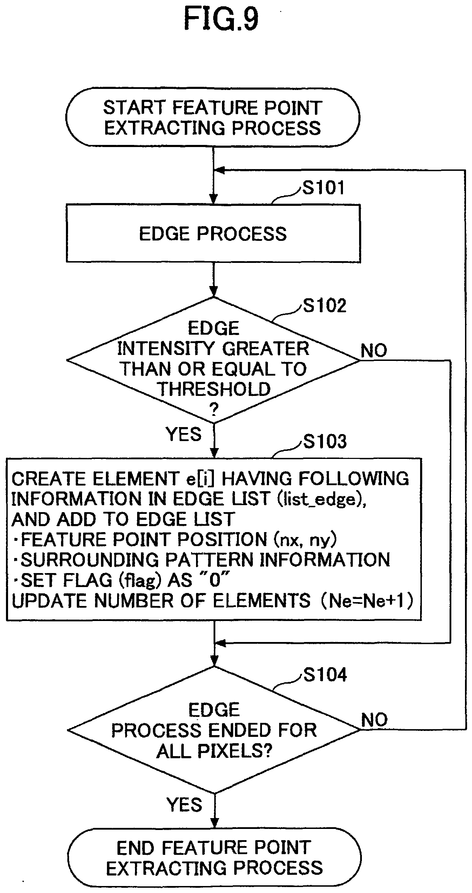

FIG. 9 is a flowchart of an example of a feature point extracting process according to the first embodiment. In step S101 of FIG. 9, the feature point extracting unit 203 performs an edge process on an input image.

In step S102, the feature point extracting unit 203 determines whether the edge intensity of the extracted edge point (feature point) is greater than or equal to a threshold. When the edge intensity is greater than or equal to the threshold (YES in step S102), the process proceeds to step S103, and when the edge intensity is less than the threshold (NO in step S102), the process proceeds to step S104.

In step S103, the feature point extracting unit 203 creates an element e[i] having the following information with respect to the edge list, and adds the created element e[i] to the edge list.

- present feature point position (nx, ny)
- surrounding pattern information
- successful/unsuccessful flag is set as "0"

A value of the successful/unsuccessful flag of "0" means unsuccessful, and a value of the successful/unsuccessful flag of "1" means successful. The feature point extracting unit 203 increments Ne expressing the number of elements of the feature point by one to update Ne (Ne=Ne+1).

In step S104, the feature point extracting unit 203 determines whether an edge process has been performed on all pixels in the image. When an edge process has been performed on all pixels (YES in step S104), the extracting process ends. When an edge process has not been performed on all pixels (NO in step S104), the process returns to step S101. By performing the above process, the feature point extracting unit 203 extracts the feature points (edge points) in the image.

Matching process

The matching unit 207 matches (cross-checks) the group of edge points obtained at the feature point extracting unit 203 and the group of past edge points recorded in the first recording unit 205. As the matching method, a typical matching process performed between images may be applied, such as setting an area of a certain size centering around the feature point and obtaining the sum of absolute differences (SAD) of differences between brightness values of feature points in the area and obtaining the sum of squared differences (SSD) of brightness differences.

Furthermore, the matching unit 207 may add, to the matching conditions, that the distance between feature points is within a threshold. When the three-dimensional position of the feature point has been obtained, the image position of the feature point may be predicted from the movement amount of the moving body. Therefore, the matching unit 207 may determine whether the matching is successful/unsuccessful based on the distance between this predicted position and the extracted feature point.

The matching unit 207 performs the matching process by using a registered list (list_reg) recorded in the second recording unit 213, and the edge list (list_edge) obtained from the feature point extracting unit 203.

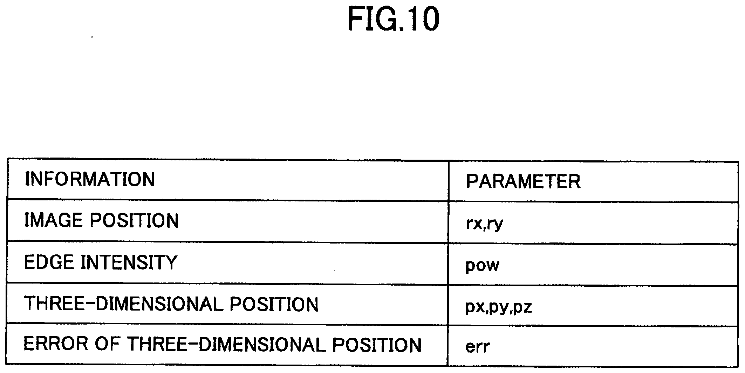

The registered list (list_reg) is an assembly of elements r[i] having the information illustrated in FIG. 10. Furthermore, the registered list (list_reg) is used in time series, and is thus not initialized. When the matching is successful, the value of the element r[i] of the registered list is registered in the element e[j] of the edge list. The generating of the registered list (list_reg) is described below.

FIG. 10 illustrates examples of information held in the element in the registered list. As illustrated in FIG. 10, the element r[i] includes the image position (rx, ry) of the feature point that has been successfully matched, the edge intensity (pow), a three-dimensional position (px, py, pz) of a feature point indicated by the image position, and an error (err) of the three-dimensional position.

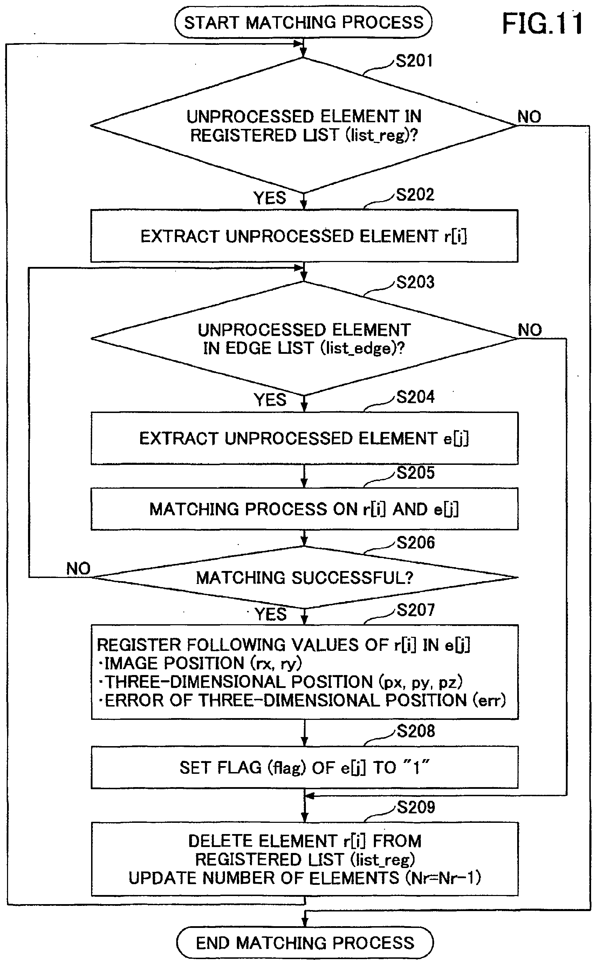

FIG. 11 is a flowchart of an example of a matching process according to the first embodiment. In step S201 of FIG. 11, the matching unit 207 determines whether there is an unprocessed element in the registered list (list_reg). When there is an unprocessed element (YES in step S201), the process proceeds to step S202, and when there is no unprocessed element (NO in step S201), the matching process ends.

In step S202, the matching unit 207 extracts an unprocessed element r[i] from the registered list.

In step S203, the matching unit 207 determines whether there is an unprocessed element in the edge list (list_edge). When there is an unprocessed element (YES in step S203), the process proceeds to step S204, and when there is no unprocessed element (NO in step S203), the process proceeds to step S209.

In step S204, the matching unit 207 extracts an unprocessed element e[j] from the edge list.

In step S205, the matching unit 207 performs a matching process between feature points of r[i] and e[j]. This matching process is performed by comparing pixel values in a predetermined area including feature points, as described above.

In step S206, the matching unit 207 determines whether the matching is successful. For example, the matching unit 207 determines that the matching is successful if the SAD and the SSD of the brightness values between predetermined areas is less than or equal to a threshold. When the matching is successful (YES in step S206), the process proceeds to step S207, and when the matching is unsuccessful (NO in step S206), the process returns to step S203.

In step S207, the matching unit 207 registers the following values of the element r[i] in the element e[j].

- image position (rx, ry)
- three-dimensional position (px, py, pz)
- error of three-dimensional position (err)

In step S208, the matching unit 207 sets the flag of the element e[j] to "1". In step S209, the matching unit 207 deletes the element r[i] from the registered list. The matching unit 207 decrements the number of elements Nr in the registered list by one to update Nr (Nr=Nr-1). By performing the above process, the matching unit 207 performs the matching process and registers, in the edge list, information of the matched feature point.

Three-dimensional position calculation process

The position calculating unit 211 calculates the three-dimensional position from the edge point positions of two time points that have been successfully matched at the matching unit 207 and the actions of the moving body. The action of the vehicle is also the movement amount of, for example, the camera 20, which is acquired with sensors of the vehicle speed and the steering angle. In the following, a description is given of a method of calculating a three-dimensional position.

Formula (1) expresses the position of the image feature point at a past time point (t-m), and formula (2) expresses the position of the image feature point at a present time point (t).

Formula (1)

$$n(t-m) = \begin{pmatrix} nx(t-m) \\ ny(t-m) \\ nz(t-m) \end{pmatrix}$$

Formula (2)

$$n(t) = \begin{pmatrix} nx(t) \\ ny(t) \\ nz(t) \end{pmatrix}$$

With respect to the camera 20, conversion parameters for converting a standard coordinate system Xw(t) provided on a moving body to a camera coordinate system xc(t), are set as Ry, Ty.

Ry: Rotation matrix
Ty: Translational movement vector

$$xc(t) = Ry \cdot (Xw(t) - Ty)$$

Conversion parameters for converting a standard coordinate system Xw(t-m) of a moving body at a time point (t-m) to a standard coordinate system Xw(t) at a time t, are set as $Rt^m$, $Tt^m$.

$Rt^m$: Rotation matrix
$Tt^m$: Translational movement vector

$$Xwt = Rt^m \cdot (Xw(t-m) - Tt^m)$$

In this case, the rotational matrix $Rt^m$ is expressed by formula (3) (a is the rotational angle), and the translational movement vector is formula (4).

Formula (3)

$$Rt^m = \begin{pmatrix} \cos(a^m) & \sin(a^m) & 0 \\ -\sin(a^m) & \cos(a^m) & 0 \\ 0 & 0 & 1 \end{pmatrix}$$

Formula (4)

$$Tt^m = \begin{pmatrix} Tx^m \\ Ty^m \\ 0 \end{pmatrix}$$

Formulas (3) and (4) may be converted to be expressed as formulas (5) and (6).

Formula (5)

$$Rv^m = Ry \cdot Rt \cdot Ry^T = \begin{pmatrix} \cos(av^m) & 0 & -\sin(av^m) \\ 0 & 1 & 0 \\ \sin(av^m) & 0 & \cos(av^m) \end{pmatrix}$$

Formula (6)

$$Tv^m = Ry \cdot Rt^T \left( (I - Rt) \cdot T - Tt \right) = \begin{pmatrix} Tvx^m \\ 0 \\ Tvz^m \end{pmatrix}$$

The position n(t) of an image feature point at time t may be converted as formula (7) by using $Rv^m$.

Formula (7)

$$N(t) = Rv^{mT} \cdot n(t) = \begin{pmatrix} NX(t) \\ NY(t) \\ NZ(t) \end{pmatrix}$$

In this case, the distance l(t) of the feature point in a camera coordinate system at a time t is provided by formula (8).

Formula (8)

$$l(t) = \frac{Tvx^{m} \cdot nz(t-m) - Tvz^{m} \cdot nx(t-m)}{NZ(t) \cdot nx(t-m) - NX(t) \cdot nz(t-m)}$$

Therefore, the three-dimensional position P(t) in the camera coordinate system may be expressed by the following formula (9).

Formula (9)

$$P(t) = l(t) \cdot n(t) = \begin{pmatrix} l(t) \cdot nx(t) \\ l(t) \cdot ny(t) \\ l(t) \cdot nz(t) \end{pmatrix}$$

By performing the above process, the position calculating unit 211 calculates the three-dimensional position in the camera coordinate system at the feature point.

Distance measuring precision calculation process

The precision calculating unit 215 calculates the precision of the three-dimensional position of the feature point calculated by the position calculating unit 211.

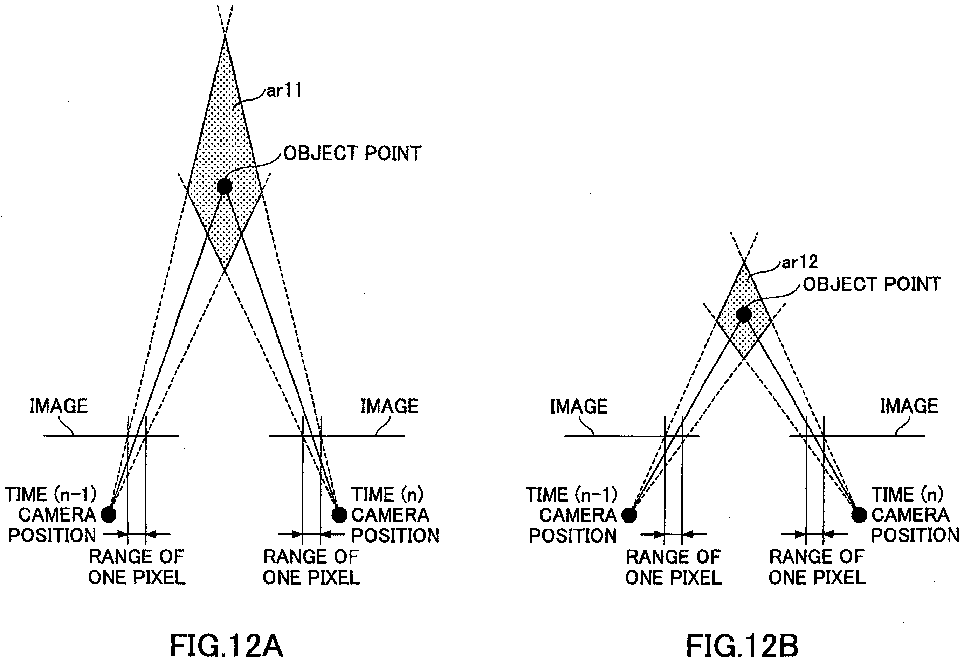

FIGS. 12A and 12B illustrate the error of the three-dimensional position according to the distance between the camera 20 and the object. As illustrated in FIGS. 12A and 12B, each pixel in the image has a certain size, and as long as the object point is within a range "ar" illustrated in FIGS. 12A and 12B, the projection position in the image does not change. Therefore, an error occurs in the three-dimensional position of the object point.

Furthermore, the size of the error changes according to the distance from the camera 20 to the object. As the distance from the camera 20 to the object becomes longer, the error will increase, and as the distance from the camera 20 to the object becomes shorter, the error will decrease.

FIG. 12A illustrates a case where the distance from the camera 20 to the object is long, and FIG. 12B illustrates a case where the distance from the camera 20 to the object is short. A range ar11 where the object point is located illustrated in FIG. 12A is larger than a range ar12 where the object point is located illustrated in FIG. 12B. Thus, the error of the three-dimensional position is larger when the distance to the object is long, rather than when the distance to the object is short. In the following, this property is also referred to as "property 1".

The precision calculating unit 215 uses the above property 1 to calculate the error of the three-dimensional position of the feature point, compares the calculated error with the error saved in time series, and selects the smaller error so that the smaller error remains, to acquire three-dimensional position information having the highest precision. The error of the three-dimensional position corresponds to the precision of the three-dimensional position. When the error of the three-dimensional position becomes low, the precision of the three-dimensional position becomes high.

Accordingly, for example, in a case where the moving body temporarily separates from the object and then approaches the object again, and the precision of the three-dimensional position increases compared to the precision before the moving body separates from the object, it is possible to update the three-dimensional position.

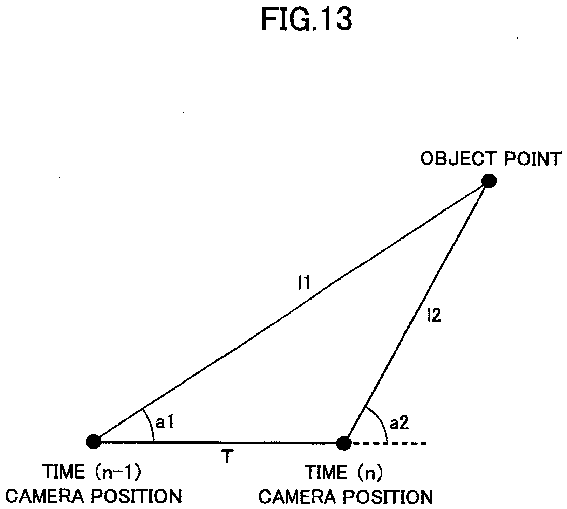

FIG. 13 illustrates the positional relationship between the object and the camera at two time points. Furthermore, FIG. 13 indicates a model for deriving a formula for calculating the error of a three-dimensional position. From the positional relationship illustrated in FIG. 13, formula (10) is derived.

Formula (10)

$$l1 \cdot \sin(a1) = l2 \cdot \sin(a2)$$

$$l1 \cdot \cos(a1) - l2 \cdot \cos(a2) = T$$

As to formula (10), by taking the square sum of each formula, l2 is expressed by formula (11).

Formula (11)

$$l2 = \sqrt{T^2 + l1^2 - 2 \cdot T \cdot l1 \cdot \cos(a1)}$$

When a derivative is calculated at an a1 change with respect to l2, formula (11) is converted to formula (12).

Formula (12)

$$\frac{dl2}{da1} = \frac{T \cdot l1 \cdot \sin(a1)}{\sqrt{T^2 + l1^2 - 2 \cdot T \cdot l1 \cdot \cos(a1)}}$$

In this case, a1 changes by da at maximum, and therefore l2err indicating the error of the three-dimensional position is expressed by formula (13). In this formula, da is an angle corresponding to 0.5 pixels.

Formula (13)

$$l2err = da \cdot \frac{dl2}{da1}$$

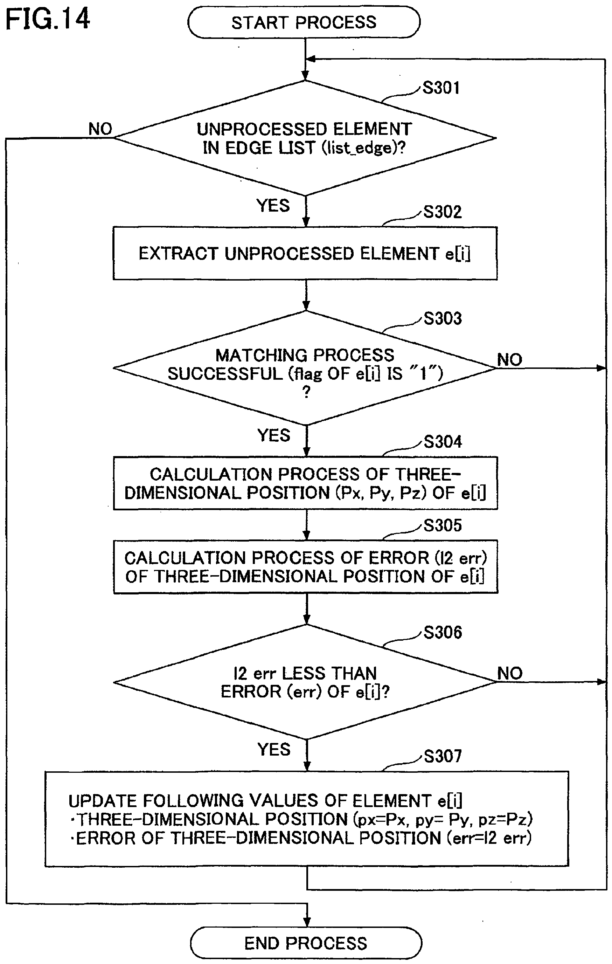

FIG. 14 is a flowchart of an example of a three-dimensional position calculating process and a precision calculating process according to the first embodiment. In step S301 of FIG. 14, the position calculating unit 211 determines whether there is an unprocessed element in the edge list (list_edge). When there is an unprocessed element (YES in step S301), the process proceeds to step S302, and when there is no unprocessed element (NO in step S301), the process ends.

In step S302, the position calculating unit 211 extracts an unprocessed element e[i] from the edge list.

In step S303, the position calculating unit 211 determines whether the matching process is successful. When the flag of the element e[i] is "1", the position calculating unit 211 determines that the matching is successful. When the matching is successful (YES in step S303), the process proceeds to step S304, and when the matching is unsuccessful (NO in step S303), the process returns to step S301.

That is to say, the position calculating unit 211 refers to a flag indicating whether the matching process is successful for each element e[i] of the edge list (list_edge), to determine whether to calculate the three-dimensional position.

In step S304, the position calculating unit 211 calculates the three-dimensional position (Px, Py, Pz) as described above.

In step S305, the precision calculating unit 215 calculates the error (l2 err) of the three-dimensional position as described above.

In step S306, the precision calculating unit 215 compares the calculated error (l2 err) of the three-dimensional position with the error (err) of the three-dimensional position of the element e[i]. The precision calculating unit 215 determines whether the error (l2 err) of the three-dimensional position of the present time is less than the error (err) of the three-dimensional position of e[i] of the time series (past). When l2 err is less than err (YES in step S306), the process proceeds to step S307, and when l2 err is greater than or equal to err (NO in step S306), the process returns to step S301.

In step S307, the precision calculating unit 215 performs a process of updating the element e[i]. In this case, the precision calculating unit 215 replaces the three-dimensional position (px, py, pz) of e[i] with the three-dimensional position (Px, Py, Pz) of the present time, and replaces the error (err) of the three-dimensional position with the error (l2 err) of the three-dimensional position of the present time. The above process is performed for each element of the edge list (list_edge).

Registration process of feature points

After the three-dimensional positions and the errors of the three-dimensional positions are calculated, the information of the feature points used at the next time point is registered.

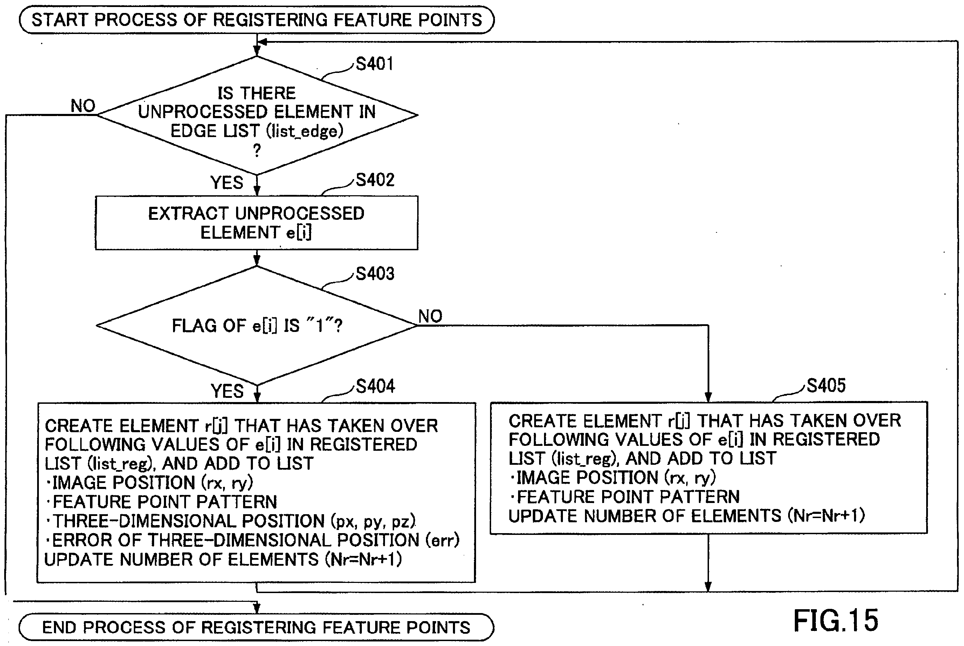

FIG. 15 is a flowchart of an example of a process of registering feature points according to the first embodiment. The process illustrated in FIG. 15 is described as being performed by the precision calculating unit 215; however, a registration unit of a separate configuration may be provided, and the process may be performed by the registration unit.

In step S401 of FIG. 15, the precision calculating unit 215 determines whether there is an unprocessed element in the edge list (list_edge). When there is an unprocessed element (YES in step S401), the process proceeds to step S402, and when there is no unprocessed element (NO in step S401), the process ends.

In step S402, the precision calculating unit 215 extracts an unprocessed element e[i] from the edge list.

In step S403, the precision calculating unit 215 determines whether the matching process is successful. When the flag of the element e[i] is "1", the precision calculating unit 215 determines that the matching is successful. When the matching is successful (YES in step S403), the process proceeds to step S404, and when the matching is unsuccessful (NO in step S403), the process proceeds to step S405.

In step S404, the precision calculating unit 215 creates, in the registered list (list_reg), as a feature point which has been successfully matched, an element r[j] that has taken over the image position, the feature point pattern, the three-dimensional position, and the error of the three-dimensional position of e[i], and adds the element r[j] to the registered list.

In step S405, the precision calculating unit 215 creates, in the registered list (list_reg), as a new feature point, an element r[j] that has taken over the image position and the feature point pattern of e[i], and adds the element r[j] to the registered list. By performing the above process, the precision calculating unit 215 may generate and update the registered list.

Precision prediction process

The precision predicting unit 217 predicts the precision of a future three-dimensional position of a feature point from the motions (actions) of the moving body. The moving body makes orderly movements such as straight advance and rotation, and therefore it is possible to predict future movements from movements of the moving body of the past and present.

The precision predicting unit 217 predicts, for each feature point, the future three-dimensional position from the three-dimensional position acquired by the position calculating unit 211 and the actions of the moving body recorded in time series. As described with regard to the precision calculating unit 215, the precision of the three-dimensional position changes according to the distance from the camera 20 to the feature point, and therefore it is possible to predict the future precision.

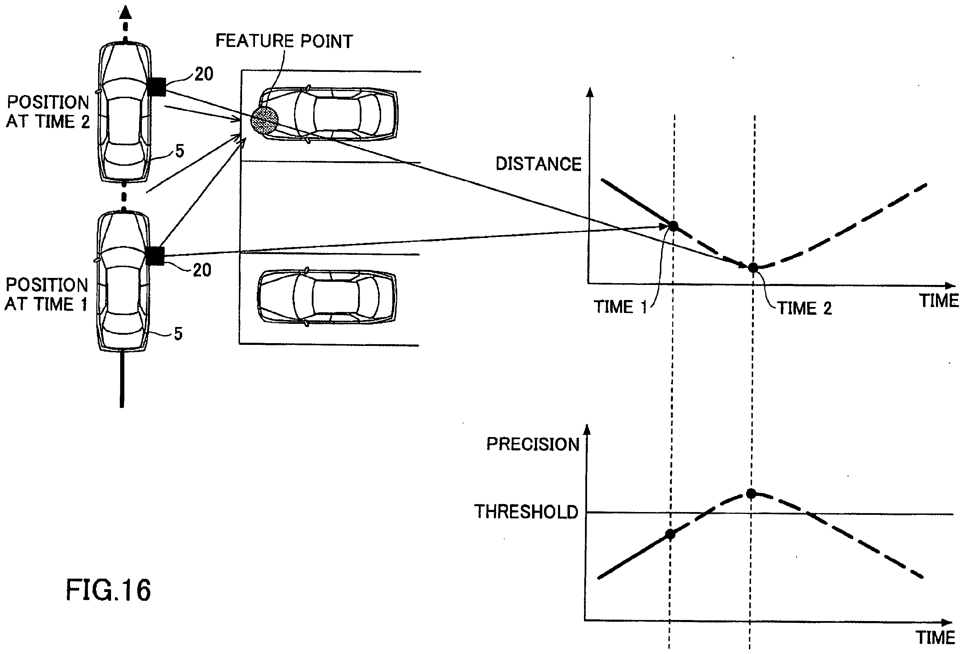

FIG. 16 illustrates the transition of the distance from the camera 20 to the feature point and the precision in a case where the moving body (vehicle) 5 is moving straight ahead. Comparing time 1 and time 2, the distance from the camera 20 to the feature point is shorter at time 2.

Note that as the distance from the camera 20 and the feature becomes shorter, the precision of the three-dimensional position will increase, and therefore it is known that the precision of the three-dimensional position is higher at time 2. That is to say, at time 1, when it is known that the moving body will move straight ahead from now on, based on past actions, the precision predicting unit 217 predicts that the future precision of the three-dimensional position of the feature point will increase.

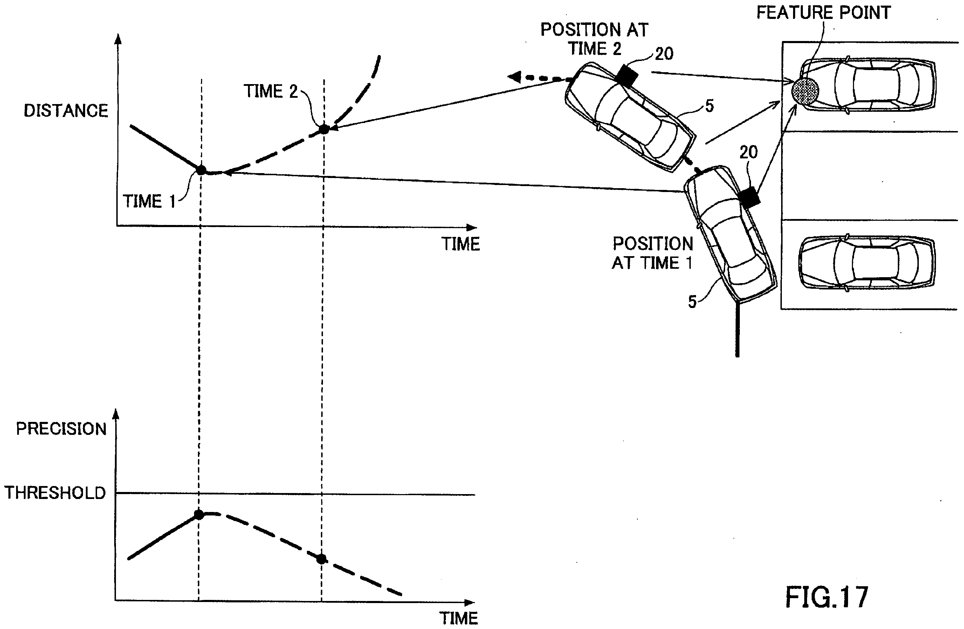

FIG. 17 illustrates the transition of the distance from the camera 20 to the feature point and the precision in a case where the moving body (vehicle) 5 moves straight ahead while rotating. Comparing time 1 and time 2, the distance from the camera 20 to the feature point is longer at time 2. Therefore, it is known that the precision of the three-dimensional position will decrease at time 2.

That is to say, at time 1, when it is known that the moving body will rotate based on past actions, the precision predicting unit 217 predicts that the future precision of the three-dimensional position of the feature point will decrease.

As a method of predicting the movement amount of the moving body 5, a typical filtering method may be applied. For example, the precision predicting unit 217 may predict the movement amount by performing linear approximation from the movement amount to past n frames, or may directly use the movement amount of the present time assuming that changes in the movement amount are small in a short period of time.

Next, the precision predicting unit 217 uses formula (13) used by the precision calculating unit 215 to predict the error, because the future position of the moving body 5 is known from the predicted movement amount.

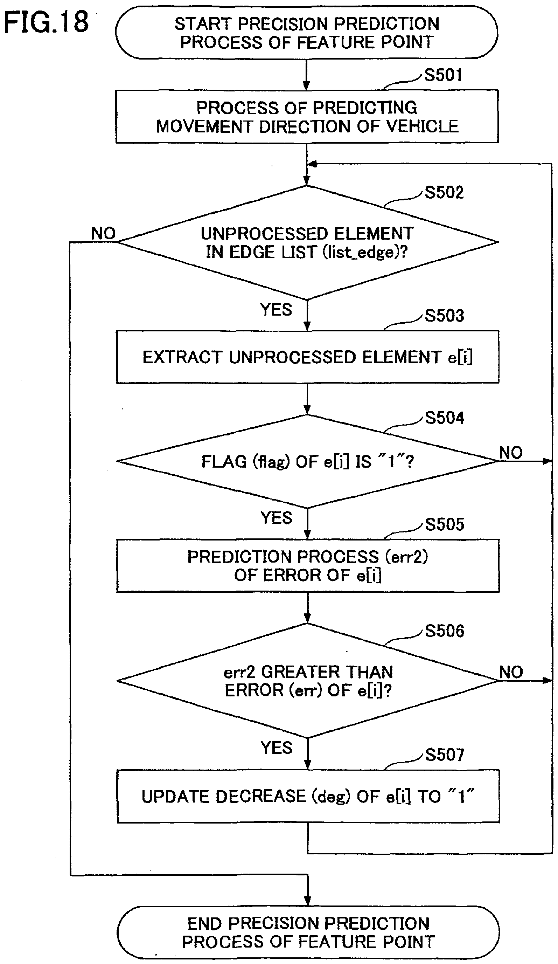

FIG. 18 is a flowchart of an example of a precision prediction process according to the first embodiment. In step S501 of FIG. 18, the precision predicting unit 217 performs a process of predicting the movement direction of the moving body from the actions of the moving body. As the method of the prediction process, any of the above methods may be used, or other known methods for predicting the action of the moving body may be used.

In step S502, the precision predicting unit 217 determines whether there is an unprocessed element in the edge list (list_edge). When there is an unprocessed element (YES in step S502), the process proceeds to step S503, and when there is no unprocessed element (NO in step S502), the process ends.

In step S503, the precision predicting unit 217 extracts an unprocessed element e[i] from the edge list.

In step S504, the precision predicting unit 217 determines whether the matching process is successful. When the flag of the element e[i] is "1", the precision predicting unit 217 determines that the matching is successful. When the matching is successful (YES in step S504), the process proceeds to step S505, and when the matching is unsuccessful (NO in step S504), the process returns to step S502.

In step S505, the precision predicting unit 217 performs a process of predicting the error of the element e[i], and calculates a prediction error err2.

In step S506, the precision predicting unit 217 compares the prediction error err2 with the error (err) of e[i]. The precision predicting unit 217 determines whether err2 is greater than err. When err2 is greater than err (YES in step S506), the process proceeds to step S507, and when err2 is less than or equal to err (NO in step S506), the process returns to step S502.

In step S507, the precision predicting unit 217 updates the decrease (deg) of the element e[i] to "1". This is done to set the present feature point as the usage target, in a case where err2 is greater than err, i.e., when it is predicted that the precision will decrease. By performing the above process, the precision predicting unit 217 predicts the precision, and as for a feature point whose precision is predicted to decrease in the future, the present feature point may be set as a usage target for generating a shape.

Precision distribution determination process

The distribution determining unit 219 detects an object from a group of feature points whose three-dimensional positions have been calculated, and calculates a precision distribution of feature points for each object. Accordingly, in a case where the ratio of feature points having high precision is greater than or equal to a threshold, it is possible to select only feature points having high precision from the object area.

In a case where the ratio of feature points having low precision is greater than or equal to a threshold, feature points having low precision may also be included in the usage target. As a method of detecting an object, a typical labeling process for determining the same object may be applied, by which if the three-dimensional distance between feature points is short, these are determined as the same object. The distance between feature points may be calculated with three-dimensional positions or with two-dimensional positions in coordinates in a bird's eyes view without considering the height direction.

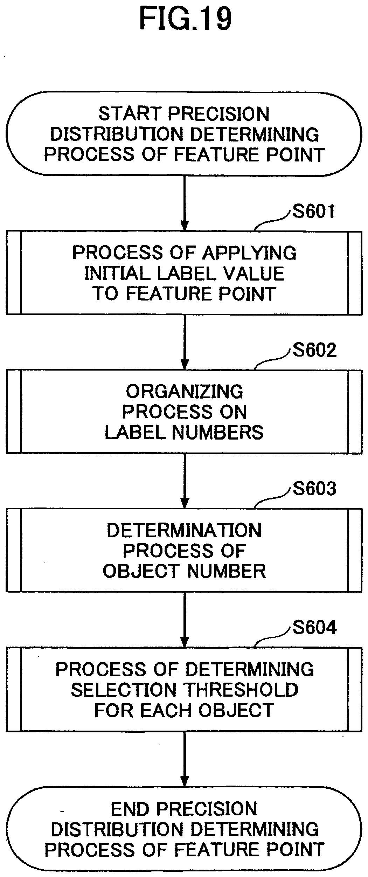

FIG. 19 is a flowchart of an example of a precision distribution determining process of a feature point according to the first embodiment. Steps S601 through S603 of FIG. 19 correspond to an object detecting process.

In step S601 of FIG. 19, the distribution determining unit 219 applies an initial label value to each of the feature points.

In step S602, the distribution determining unit 219 performs an organizing process on the applied label numbers.

In step S603, the distribution determining unit 219 performs a determination process of the object number using the organized label numbers.

In step S604, the distribution determining unit 219 performs a process of determining a selection threshold for each object identified by the object number. In the following, a detailed description is given of each process of steps S601 through S604.

Process of applying initial label value

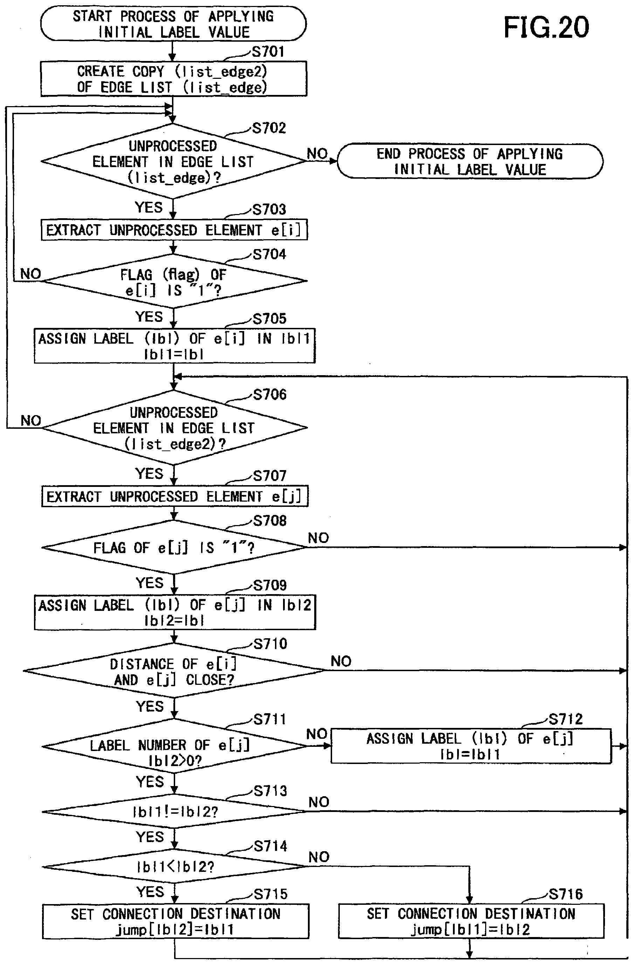

FIG. 20 is a flowchart of an example of a process of applying an initial label value according to the first embodiment. In step S701 of FIG. 20, the distribution determining unit 219 creates a copy (list_edge2) of an edge list (list_edge).

In step S702, the distribution determining unit 219 determines whether there is an unprocessed element in the edge list (list_edge). When there is an unprocessed element (YES in step S702), the process proceeds to step S703, and when there is no unprocessed element (NO in step S702), the process ends.

In step S703, the distribution determining unit 219 extracts an unprocessed element e[i] from the edge list.

In step S704, the distribution determining unit 219 determines whether the matching process is successful. When the flag of the element e[i] is "1", the distribution determining unit 219 determines that the matching is successful. When the matching is successful (YES in step S704), the process proceeds to step S705, and when the matching is unsuccessful (NO in step S704), the process returns to step S702.

In step S705, the distribution determining unit 219 assigns the label number (lbl) of the element e[i] in lbl1 (lbl1=lbl).

In step S706, the distribution determining unit 219 determines whether there is an unprocessed element in the edge list (list_edge2). When there is an unprocessed element (YES in step S706), the process proceeds to step S707, and when there is no unprocessed element (NO in step S706), the process returns to step S702.

In step S707, the distribution determining unit 219 extracts an unprocessed element e[j] from the edge list.

In step S708, the distribution determining unit 219 determines whether the matching process is successful. When the flag of the element e[j] is "1", the distribution determining unit 219 determines that the matching is successful. When the matching is successful (YES in step S708), the process proceeds to step S709, and when the matching is unsuccessful (NO in step S708), the process returns to step S706.

In step S709, the distribution determining unit 219 assigns the label number (lbl) of the element e[j] in lbl2 (lbl2=lbl).

In step S710, the distribution determining unit 219 determines the distance between e[i] and e[j] to determine whether these elements are close to each other. For example, the distance is determined as short if the difference in the three-dimensional positions is less than or equal to a threshold, and the distance is determined as long when the difference is greater than the threshold. An appropriate value is set in advance as the threshold.

When the distance is short, the distribution determining unit 219 determines that the elements are of a same object (YES in step S710), and the process proceeds to step S711. When the distance is not short, the distribution determining unit 219 determines that the elements are of different objects (NO in step S710), and the process returns to step S706.

In step S711, the distribution determining unit 219 determines whether the label number of e[j] is not an initial value. The initial value of a label number is, for example, zero. Therefore, the distribution determining unit 219 determines whether the lbl2>0 is satisfied. When lbl2>0 is satisfied (YES in step S711), the process proceeds to step S713, and when lbl2≤0 is satisfied (NO in step S711), the process proceeds to step S712.

In step S712, the distribution determining unit 219 assigns the label (lbl) of e[j] in lbl1 (lbl=lbl1).

In step S713, the distribution determining unit 219 determines whether the label numbers of lbl1 and lbl2 are different. When the two label numbers are different (YES in step S713), the process proceeds to step S714, and when the label numbers are the same (NO in step S713), the process returns to step S706.

When the label lbl2 is not an initial value, and the two label numbers are different, in step S714, the distribution determining unit 219 compares the values of the two labels. The distribution determining unit 219 determines whether lbl1 is smaller than lbl2. When lbl1<lbl2 is satisfied (YES in step S714), the process proceeds to step S715, and when lbl1≥lbl2 is satisfied (NO in step S714), the process proceeds to step S716.

When lbl1 is smaller, in step S715, the distribution determining unit 219 assigns lbl1 in jump(lbl2) of a connection destination list (list_jump) .

When lbl1 is greater, in step S716, the distribution determining unit 219 assigns lbl2 in jump[lbl1] of a connection destination list (list_jump). After steps S715 and S716, the process returns to step S706.

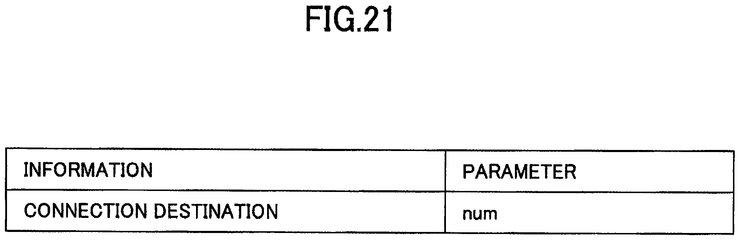

In this case, the connection destination list (list_jump) is an assembly of elements jump [i] having the information illustrated in FIG. 21. FIG. 21 illustrates an example of information held in the element in the connection destination list. As illustrated in FIG. 21, the element jump[i] held in the connection destination list includes a parameter (num) as the connection destination.

At the stage where the above process has ended, different label values are applied even for the same object, and therefore the label numbers are organized.

Process of organizing label numbers

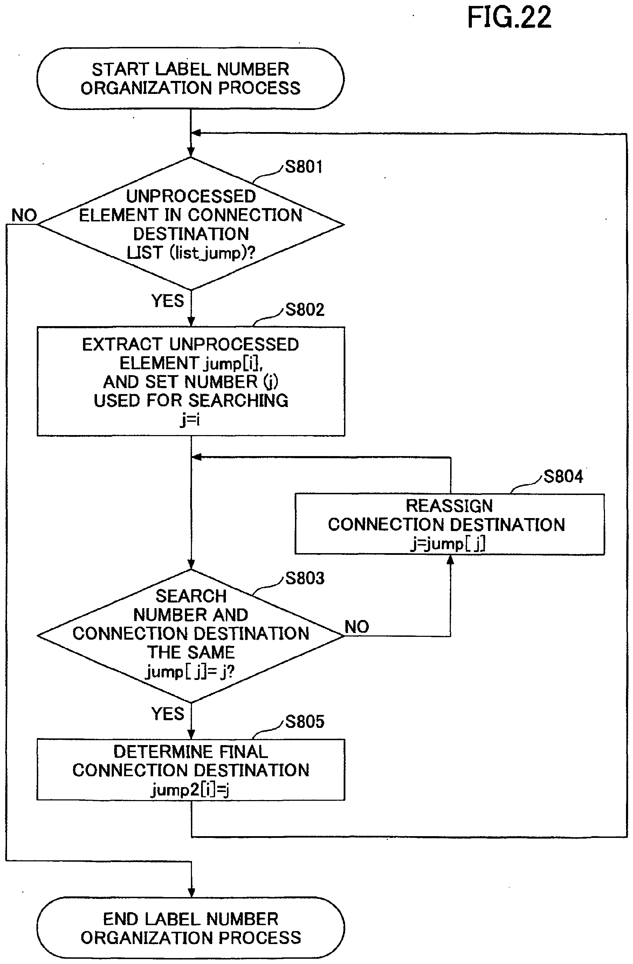

**[0149]** FIG. 22 is a flowchart of an example of a process of organizing label numbers according to the first embodiment. In step S801 of FIG. 22, the distribution determining unit 219 determines whether there is an unprocessed element in the connection destination list (list_jump). When there is an unprocessed element (YES in step S801), the process proceeds to step S802, and when there is no unprocessed element (NO in step S801), the process ends.

In step S802, the distribution determining unit 219 extracts an unprocessed element jump[i], and sets a number (j) used for searching (j=i). In the following the number used for searching is also referred to as a search number.

In step S803, the distribution determining unit 219 determines whether the search number (j) and the number of the connection destination (jump [j]) are the same. When jump [j]=j is satisfied (YES in step S803), the process proceeds to step S805, and when jump [j]=j is not satisfied (NO in step S803), the process proceeds to step S804.

When the search number and the number of the connection destination are different, in step S804, the distribution determining unit 219 assigns the number of the connection destination (jump [j]) to the search number (j). This process is repeated until these numbers become equal.

When the search number and the number of the connection destination become equal, in step S805, the distribution determining unit 219 assigns this search number in the final connection destination list (list_jump2) (jump2[i]=j). This process is performed for each of the elements in the connection destination list (list_jump).

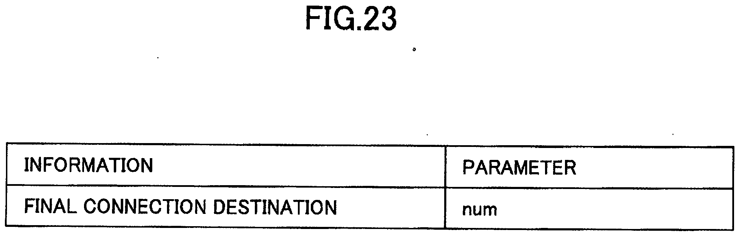

In this case, the final connection destination list (list_jump2) is an assembly of elements jump2[i] having the information illustrated in FIG. 23. FIG. 23 illustrates an example of information held in the element in the final connection destination list. As illustrated in FIG. 23, an element jump2 [i] in the final connection destination list has a parameter (num) as the final connection destination.

Object number determining process

Next, the distribution determining unit 219 applies a object number after organizing the label numbers, and performs object detection.

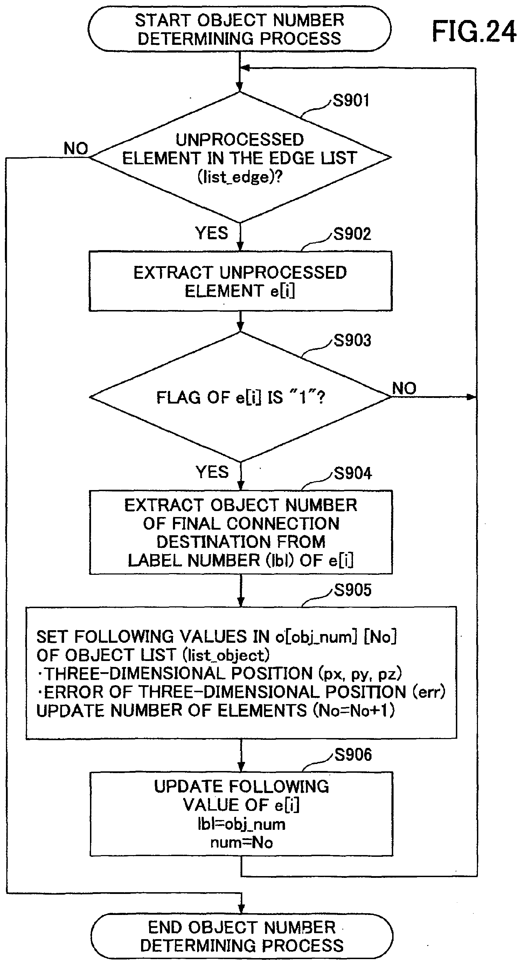

FIG. 24 is a flowchart of an example of an object number determining process according to the first embodiment. In step S901 of FIG. 24, the distribution determining unit 219 determines whether there is an unprocessed element in the edge list (list_edge). When there is an unprocessed element (YES in step S901), the process proceeds to step S902, and when there is no unprocessed element (NO in step S901), the process ends.

In step S902, the distribution determining unit 219 extracts an unprocessed element e[i] from the edge list.

In step S903, the distribution determining unit 219 determines whether the matching process is successful. When the flag of the element e[i] is "1", the distribution determining unit 219 determines that the matching is successful. When the matching is successful (YES in step S903), the process proceeds to step S904, and when the matching is unsuccessful (NO in step S903), the process returns to step S901.

In step S904, the distribution determining unit 219 extracts a final connection destination number (jump2 [lbl]) from the label number (lbl), with respect to the element e[i].

In step S905, the distribution determining unit 219 registers the extracted number as an object number (obj_num) in an object list (list_object). Furthermore, the distribution determining unit 219 sets a three-dimensional position (px, py, pz) in the object list, and sets an error (err) of the three-dimensional position. Furthermore, the distribution determining unit 219 updates the number of elements in the object list (No=No+1).

In step S906, the distribution determining unit 219 updates the label (lbl) of e[i] and the in-object number (num) (lbl=obj_num, num=No). The above process is performed for each of the elements in the edge list (list_edge).

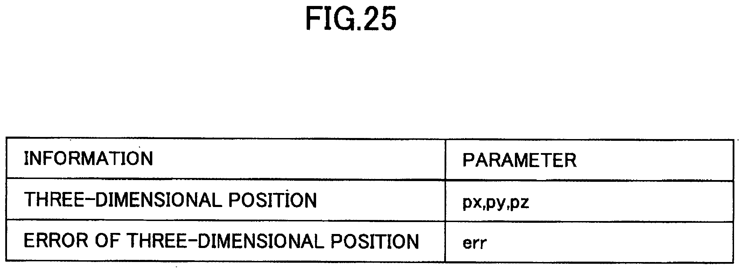

In this case, the object list (list_object) is an assembly of elements o[i][j] having information illustrated in FIG. 25. FIG. 25 illustrates examples of information held in the element in the object list. As illustrated in FIG. 25, the elements o[i] [j] held in the object list includes a three-dimensional position and an error of the three-dimensional position. Note that the number of elements of i is the number of objects, and the number of elements of j is the number of feature points of each object.

Selection threshold setting process

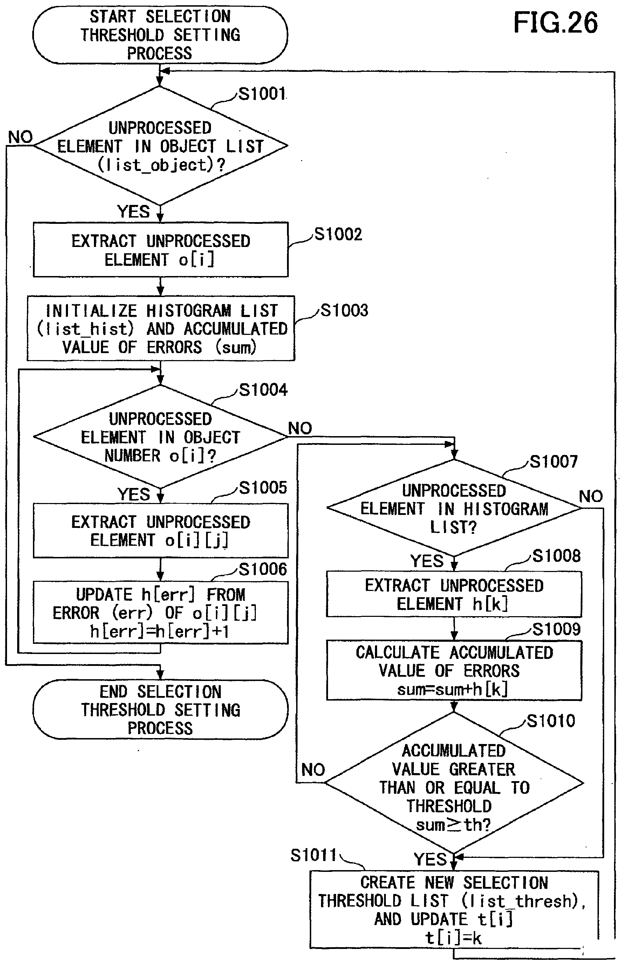

FIG. 26 is a flowchart of an example of a process of setting a selection threshold according to the first embodiment. In step S1001 illustrated in FIG. 26, the distribution determining unit 219 determines whether there is an unprocessed element in the object list (list_object). When there is an unprocessed element (YES in step S1001), the process proceeds to step S1002, and when there is no unprocessed element (NO in step S1001), the process ends.

In step S1002, the distribution determining unit 219 extracts an unprocessed element o[i] from the object list.

In step S1003, the distribution determining unit 219 initializes a histogram list (list_hist) and an accumulated value of errors (sum) (list_hist=0, sum=0).

In step S1004, the distribution determining unit 219 determines whether there is an unprocessed element in the object number o[i]. When there is an unprocessed element (YES in step S1004), the process proceeds to step S1005, and when there is no unprocessed element (NO in step S1004), the process proceeds to step S1007.

In step S1005, the distribution determining unit 219 extracts an unprocessed element o[i] [j] from the object list.

In step S1006, the distribution determining unit 219 updates the h[err] of the histogram list (list_hist) from the error (err) of the element o[i] [j] (h [err] =h [err] +1). After step S1006, the process returns to step S1004.

When the process for one object ends, in step S1007, the distribution determining unit 219 determines whether there is an unprocessed element in the histogram list. When there is an unprocessed element (YES in step S1007), the process proceeds to step S1008, and when there is no unprocessed element (NO in step S1007), the process proceeds to step S1011.

In step S1008, the distribution determining unit 219 extracts an unprocessed element h[k] from the histogram list.

In step S1009, the distribution determining unit 219 calculates an accumulated value of errors (sum) from the histogram list (list_hist) (sum=sum+h [k]).

In step S1010, the distribution determining unit 219 determines whether the accumulated value is greater than or equal to a threshold (sum≥th). When sum≥th is satisfied (YES in step S1010), the process proceeds to step S1011, and when sum<th is satisfied (NO in step S1010), the process returns to step S1007. As the threshold th, an appropriate value may be set in advance, or a value that is 80% the value of the element may be appropriately set.

In step S1011, the distribution determining unit 219 creates a new selection threshold list (list_thresh), and assigns an error threshold (k) in t[i]. The above process is performed for each of the objects in the object list (list_object).

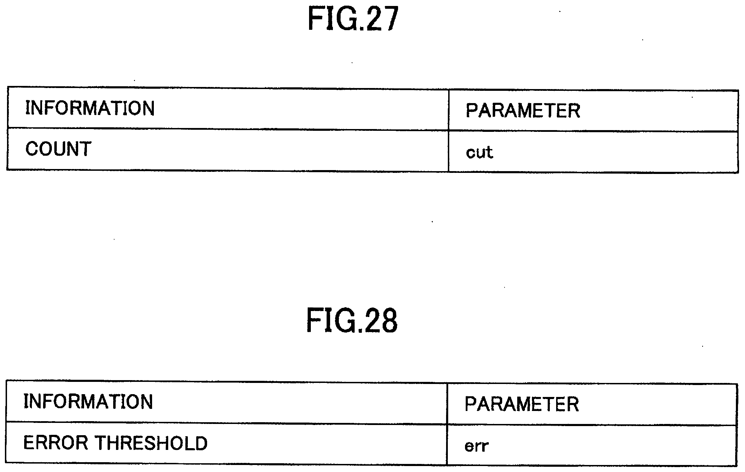

In this case, the histogram list (list_hist) is an assembly of elements h[i] having the information illustrated in FIG. 27. FIG. 27 illustrates an example of information held in the element in the histogram list according to the first embodiment. As illustrated in FIG. 27, the element of the histogram list includes a count.

The selection threshold list (list_thresh) is an assembly of elements t[i] having the information illustrated in FIG. 28. FIG. 28 illustrates an example of information held in the element in the selection threshold list. As illustrated in FIG. 28, the element of the selection threshold list includes an error threshold.

By performing the above process, the distribution determining unit 219 generates a precision distribution of feature points for each object, and may set the selection threshold (t[i]) for each object based on the precision distribution.

Feature point selecting process

The selecting unit 221 selects a feature point to be used for generating a shape, by using processing results from the precision predicting unit 217 and the distribution determining unit 219.

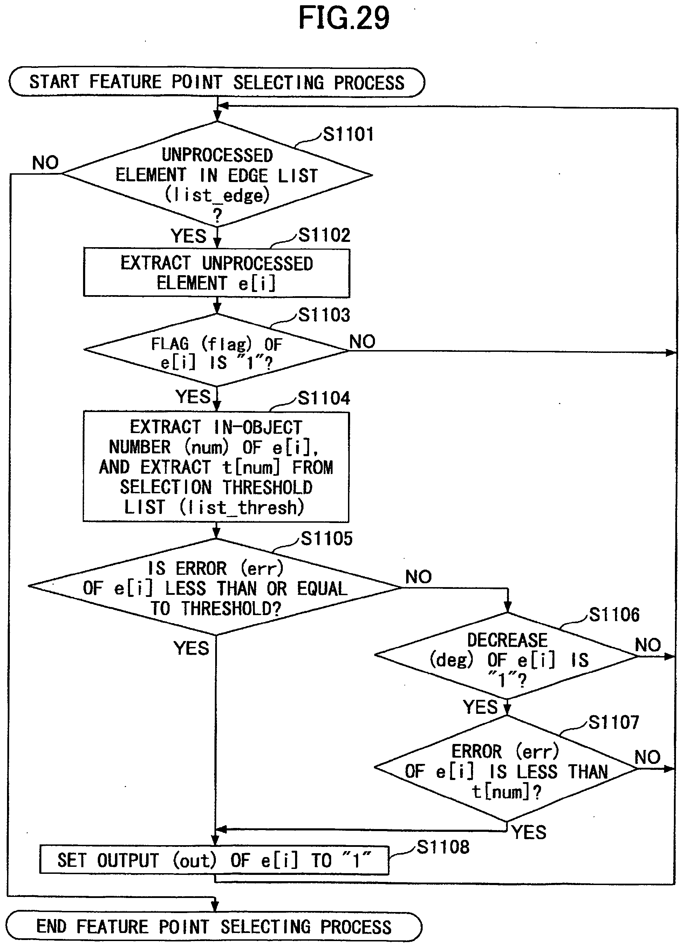

FIG. 29 is a flowchart of an example of a process of selecting a feature point according to the first embodiment. In step S1101 of FIG. 29, the selecting unit 221 determines whether there is an unprocessed element in the edge list (list_edge). When there is an unprocessed element (YES in step S1101), the process proceeds to step S1102, and when there is no unprocessed element (NO in step S1101), the process ends.

In step S1102, the selecting unit 221 extracts an unprocessed element e[i] from the edge list.

In step S1103, the selecting unit 221 determines whether the matching process is successful. When the flag of the element e[i] is "1", the selecting unit 221 determines that the matching is successful. When the matching is successful (YES in step S1103), the process proceeds to step S1104, and when the matching is unsuccessful (NO in step S1103), the process returns to step S1101.

In step S1104, the selecting unit 221 extracts an in-object number (num) of e[i], and extracts t[num] from the selection threshold list (list_thresh).

In step S1105, the selecting unit 221 determines whether the error (err) of e[i] is less than or equal to a common threshold. As a common threshold, an appropriate value for increasing the precision of the feature point to be used may be set in advance. When the error is less than or equal to the common threshold (YES in step S1105), the process proceeds to step S1108, and when the error is greater than the common threshold (NO in step S1105), the process proceeds to step S1106.

In step S1106, the selecting unit 221 determines whether the decrease (deg) of e[i] is one. When deg is one (YES in step S1106), the process proceeds to step S1107, and when deg is not one (NO in step S1106), the process returns to step S1101. When deg is one, it means that the precision of the feature point will decrease in the future. Thus, a determination is made whether to use the present feature point for generating a shape.

In step S1107, the selecting unit 221 determines whether the error (err) of e[i] is less than a threshold t[num] for each object. When err<t [num] is satisfied (YES in step S1107), the process proceeds to step S1108, and when err≥t [num] is satisfied (NO in step S1107), the process returns to step S1101.

In step S1108, in order to set the element as a usage target for generating a shape, the selecting unit 221 sets the output (out) of e[i] to "1". The above process is performed for each of the elements in the edge list (list_edge).

By performing the above process, the selecting unit 221 may include, as usage targets for shape generation, not only the feature points having high precision, but also feature points satisfying a determination standard for each object, so that the shape is prevented from being incomplete. Furthermore, in order to prevent feature points having low precision from being selected, a lower limit may be set with respect to the threshold of each object.

Furthermore, the image processing device 10 may select, for each object, feature points having a precision higher than the selection threshold for each object, by using only the selection threshold for each object set from the precision distribution, without performing the process of predicting the precision.

Object shape generating process

The generating unit 223 generates an object shape using feature points selected at the selecting unit 221, i.e., feature points indicating "1" as the output (out) of e[i] in the edge list.

As described above, according to the first embodiment, an appropriate object shape is generated for each object. Furthermore, according to the first embodiment, by predicting the precision of the three-dimensional position, the timing of using the feature point is appropriately determined. Furthermore, according to the first embodiment, a threshold is set for each object, and therefore the object shape is prevented from being incomplete.

Second embodiment

Next, a description is given of an image processing system according to a second embodiment. In the image processing system according to the second embodiment, a restriction is applied to the feature points to be used for generating an object shape, according to the distance from the moving body.

Configuration

The configuration of the image processing system according to the second embodiment is the same as that of the first embodiment (see FIG. 6), and is thus not further described.

Functions

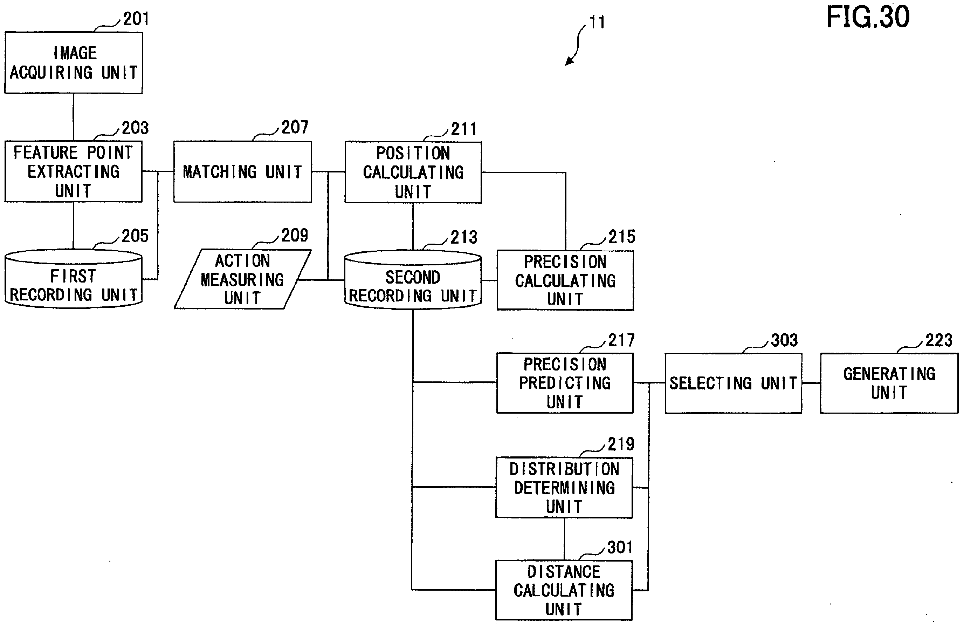

FIG. 30 is a functional block diagram of an image processing device 11 according to the second embodiment. Functions of the image processing device 11 according to the second embodiment that are the same as those of the first embodiment are denoted by same reference numerals. In the following, the functions different from those of the first embodiment are mainly described.

A distance calculating unit 301 obtains the feature point of the object that is closest to the moving body. The distance calculating unit 301 identifies feature points that are within a predetermined range from the closest feature point. That is to say, among the feature points of the object, the distance calculating unit 301 identifies feature points close to the moving body. The distance calculating unit 301 outputs the identified feature points to a selecting unit 303 for each object.

The selecting unit 303 performs the above selecting process for feature points within a predetermined range from the feature point closest to the moving body. Accordingly, a selecting process is not performed on feature points that are far away from the moving body, i.e., feature points having low precision.

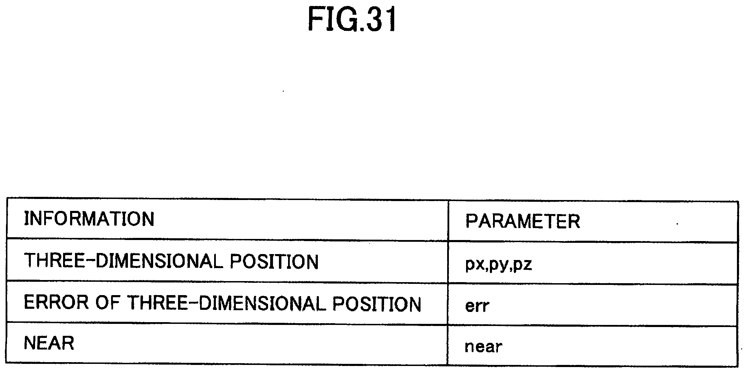

Note that in the second embodiment, the object list holds information illustrated in FIG. 31. FIG. 31 illustrates examples of information held in the element of the object information according to the second embodiment. As illustrated in FIG. 31, in the second embodiment, information indicating (near) is newly added to the object list. When (near) is indicating "1", it means that the feature point is close to the moving body. When (near) is indicating "0", it means that the feature point is far away from the moving body.

Process of units

Next, a detailed description is given of the process contents of the distance calculating unit 301 and the selecting unit 303 according to the second embodiment.

Distance calculating process

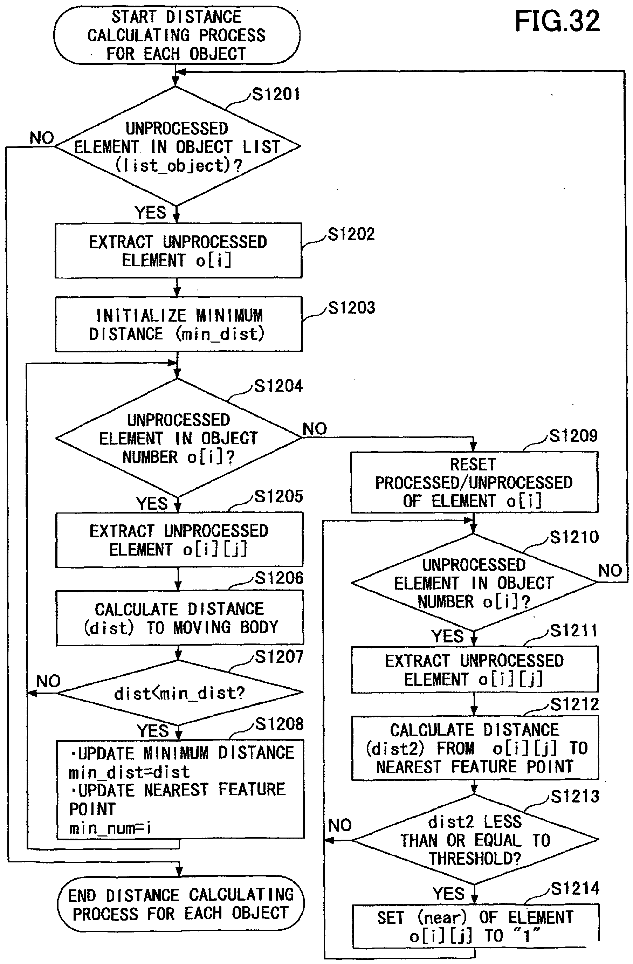

FIG. 32 is a flowchart of an example of a distance calculating process for each object according to the second embodiment. In step S1201 of FIG. 32, the distance calculating unit 301 determines whether there is an unprocessed element in the object list (list_object). When there is an unprocessed element (YES in step S1201), the process proceeds to step S1202, and when there is no unprocessed element (NO in step S1201), the process ends.

In step S1202, the distance calculating unit 301 extracts an unprocessed element o[i] from the object list.

In step S1203, the distance calculating unit 301 initializes the minimum distance (min_dist) (min_dist=0).

In step S1204, the distance calculating unit 301 determines whether there is an unprocessed element in the object number o[i]. When there is an unprocessed element (YES in step S1204), the process proceeds to step S1205, and when there is no unprocessed element (NO in step S1204), the process proceeds to step S1209.

In step S1205, the distance calculating unit 301 extracts an unprocessed element o[i][j] from the object list.

In step S1206, the distance calculating unit 301 calculates the distance (dist) from the moving body to the object.

In step S1207, the distance calculating unit 301 determines whether the distance (dist) is less than the minimum distance (min_dist). When dist<min_dist is satisfied (YES in step S1207), the process proceeds to step S1208, and when dist≥min_dist is satisfied (NO in step S1207), the process returns to step S1204.

In step S1208, the distance calculating unit 301 updates the minimum distance (min_dist=dist), and updates the nearest feature point (min_num=i).

In step S1209, the distance calculating unit 301 resets the status of processed/unprocessed of the element o[i].

In step S1210, the distance calculating unit 301 determines whether there is an unprocessed element in the object number o[i]. When there is an unprocessed element (YES in step S1210), the process proceeds to step S1211, and when there is no unprocessed element (NO in step S1210), the process returns to step S1201.

In step S1211, the distance calculating unit 301 extracts an unprocessed element o[i][j] from the object list.

In step S1212, the distance calculating unit 301 calculates the distance (dist2) from the feature point indicated by o[i] [j] to the nearest feature point.

In step S1213, the distance calculating unit 301 determines whether the distance (dist2) is less than or equal to a threshold. This threshold is for determining a predetermined range, and an appropriate value may be set as the threshold in advance. When dist2 is less than or equal to the threshold (YES in step S1213), the process proceeds to step S1214, and when dist2 is greater than the threshold (NO in step S1213), the process returns to step S1210.

In step S1214, the distance calculating unit 301 sets (near) of the element o [i] [j] to "1". The above process is performed for each of the elements in the object list.

By performing the above process, the distance calculating unit 301 sets (near) to "1" for the feature point to be used for the object shape, i.e., the feature point that is close to the moving body.

Feature point selecting process

The selecting unit 303 selects the feature points to be used for generating the shape, by using the processing results from the precision predicting unit 217, the distribution determining unit 219, and the distance calculating unit 301.

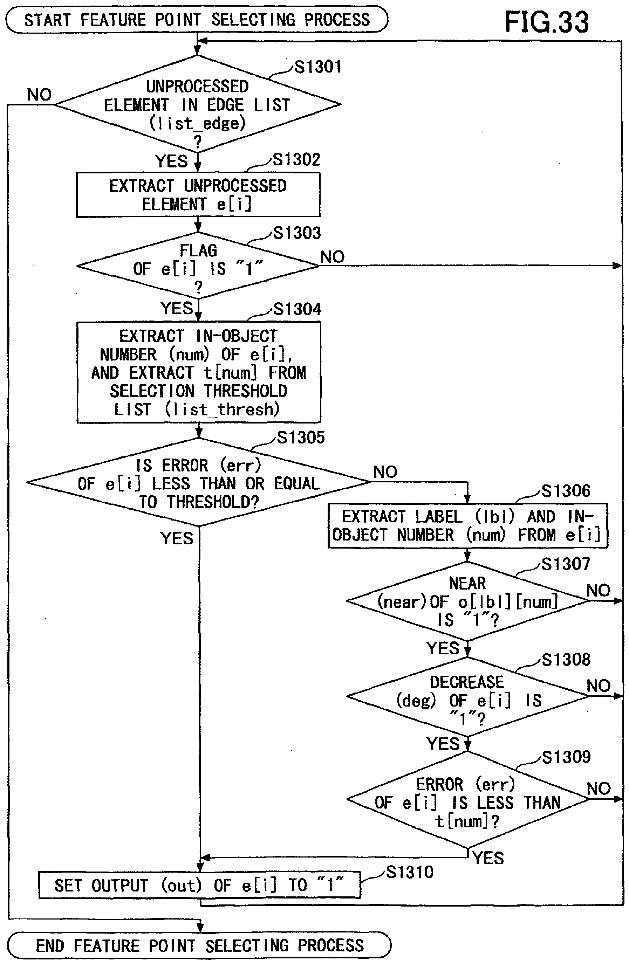

FIG. 33 is a flowchart of an example of a process of selecting a feature point according to the second embodiment. In step S1301 of FIG. 33, the selecting unit 303 determines whether there is an unprocessed element in the edge list (list_edge). When there is an unprocessed element (YES in step S1301), the process proceeds to step S1302, and when there is no unprocessed element (NO in step S1301), the process ends.

In step S1302, the selecting unit 303 extracts an unprocessed element e[i] from the edge list.

In step S1303, the selecting unit 303 determines whether the matching process is successful. When the flag of the element e[i] is "1", the selecting unit 303 determines that the matching is successful. When the matching is successful (YES in step S1303), the process proceeds to step S1304, and when the matching is unsuccessful (NO in step S1303), the process returns to step S1301.

In step S1304, the selecting unit 303 extracts an in-object number (num) of e[i], and extracts t[num] from a selection threshold list (list_thresh).

In step S1305, the selecting unit 303 determines whether the error (err) of e[i] is less than or equal to a common threshold. When the error is less than or equal to the common threshold (YES in step S1305), the process proceeds to step S1310, and when the error is greater than the common threshold (NO in step S1305), the process proceeds to step S1306.

In step S1306, the selecting unit 303 extracts a label (lbl) and an in-object number (num) from e [i].

In step S1307, the selecting unit 303 determines whether the (near) of o[lbl][num] is "1". When (near) is "1" (YES in step S1307), the process proceeds to step S1308, and when (near) is not "1" (NO in step S1307), the process returns to step S1301.

In step S1308, the selecting unit 303 determines whether the decrease (deg) of e[i] is "1". When deg is "1" (YES in step S1306), the process proceeds to step S1309, and when deg is not "1" (NO in step S1306), the process returns to step S1301.

In step S1309, the selecting unit 303 determines whether the error (err) of e[i] is less than a threshold t[num] for each object. When err<t[num] is satisfied (YES in step S1309), the process proceeds to step S1310, and when err≥t[num] is satisfied (NO in step S1309), the process returns to step S1301.

In step S1310, in order to set the element as a usage target for generating a shape, the selecting unit 303 sets the output (out) of e[i] to "1". The above process is performed for each of the elements in the edge list (list_edge).

By performing the above process, the selecting unit 303 may include, as usage targets for shape generation, the feature points having a higher precision than the common threshold, and feature points having a precision that is not higher than the common threshold but higher than the selection threshold and close to the moving body.

Note that steps S1306 and S1307 may be performed before step S1305. Accordingly, only the feature points close to the moving body are set as the targets of the selecting process.

As described above, according to the second embodiment, an appropriate object shape is generated for each object. Furthermore, according to the second embodiment, feature points close to the moving body may be set as usage targets for shape generation.

Third embodiment

Next, a description is given of an image processing system according to a third embodiment. The image processing system according to the third embodiment determines whether to perform a selecting process according to the distance between a feature point of an object and the moving body. Note that the process of the third embodiment is applicable to both the first embodiment and the second embodiment, but the following description is given of a case of applying to the first embodiment.

Configuration

The configuration of the image processing system according to the third embodiment is the same as that of the first embodiment (see FIG. 6), and is thus not further described.

Functions

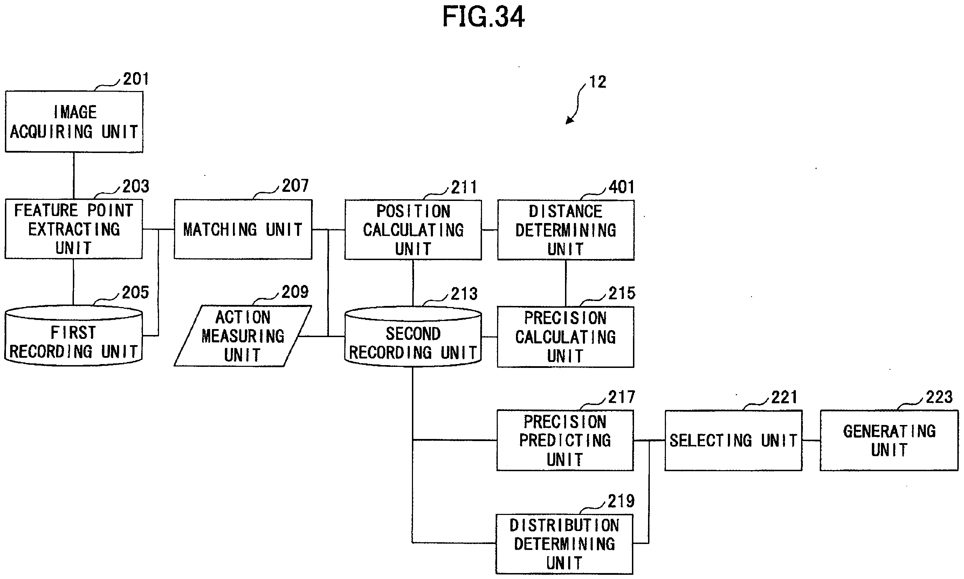

FIG. 34 is a functional block diagram of an image processing device 12 according to the third embodiment. Functions of the image processing device 12 according to the third embodiment that are the same as those of the first embodiment are denoted by same reference numerals. In the following, the functions different from those of the first embodiment are mainly described.

A distance determining unit 401 calculates the distance from a position of the feature point obtained by the position calculating unit 211 to a position of the moving body. When this distance is less than or equal to a threshold, the feature point is close to the moving body, and therefore the distance determining unit 401 causes a selecting process to be executed, which is the process performed from and beyond the precision calculating unit 215.

Furthermore, when this distance is greater than the threshold, the feature point is far away from the moving body, and therefore the distance determining unit 401 does not perform the subsequent processes. This threshold is the distance by which the precision of the feature point is maintained, and an appropriate value may be set in advance.

For example, as to the feature points for which the calculated distance is greater than the threshold, the distance determining unit 401 may delete these feature points from the elements of the edge list, or may newly set a non-usage flag in the edge list and activate the non-usage flag for these feature points.

As described above, according to the third embodiment, an appropriate object shape is generated for each object. Furthermore, according to the third embodiment, feature points whose distance to the moving body is less than a threshold may be set as usage targets for shape generation.

By the image processes described in the above embodiments, a shape of an object is generated without incomplete parts, and the shape of an object with high precision is prevented from being deformed.

By the above embodiments, for example, the three-dimensional distances from the moving body still objects in the surrounding are measured, and the measurement results may be applied to the proposed on-vehicle image processing system. Specifically, a parking support system may be considered, in which four wide angle cameras are attached to the front, back, left, and right sides of a self-vehicle, and the images of the four cameras are combined into one image. The combined image is superposed on and displayed with the surface shape of surrounding objects (parked vehicles) obtained by three-dimensional distance measurement, to support the feeling of distance with surrounding objects.

At the time of parking, the driver is to confirm the objects surrounding the self-vehicle, so as not to contact the surrounding objects. Thus, in the image processing system according to the embodiments, four images are combined to recognize the status of the entire surrounding area of 360 degrees, which is converted into an image viewed from above the vehicle (bird's-eye image).

In the image processing system according to the above embodiments, the three-dimensional positions to the feature points of the object are calculated by a motion stereo method, an object surface shape is generated from the calculation result, and is superposed on the combined image. As a result, the feeling of distances to surrounding objects and whether the vehicle may contact the surrounding objects are easily recognized by confirming the image, and a driver who is not good at parking may safely and easily park his vehicle. In the image processing system according to the above embodiments, the combined image is created by using four cameras; however, the three-dimensional distances are separately calculated at each camera.

Modification

By recording a program for realizing the image processing including the shape generating process described in the above embodiments in a recording medium, a computer may be caused to execute the communication process described in the above embodiments.

For example, the program may be recorded in a recording medium, and an on-vehicle computer may be caused to read the recording medium recording this program to realize the process described above.

The recording medium may be various types of recording media such as a recording medium for optically, electrically, or magnetically recording information, for example, a CD-ROM, a flexible disk, and a magneto-optical disk, or a semiconductor memory for electrically recording information, for example, a ROM or a flash memory. Furthermore, the recording medium does not include transient elements such as carrier waves.

The image processing device and image processing method described above in detail are not limited to specific embodiments, and variations and modifications may be made without departing from the scope of the present invention as defined in the appended claims.

According to an aspect of the embodiments, an image processing device and an image processing method are provided, by which an appropriate object shape is generated for each objet.

**Claims**

1. An image processing apparatus comprising :

   an image acquiring unit (201) configured to acquire an image from a camera installed in a moving body;
   a feature point extracting unit (203) configured to extract feature points from the image;
   a matching unit (207) configured to perform a matching process on the feature points extracted from the images that have been taken at different time points;
   a position calculating unit (211) configured to calculate a three-dimensional position of each feature point that has been matched based on a position of the feature point that has been matched and a movement amount of the moving body;
   a precision calculating unit (215) configured to calculate a precision indicating an error of the three-dimensional position;
   a distribution determining unit (219) configured to detect an object from the image based on a group of feature points whose three-dimensional positions have been calculated, **characterised in that** the distribution unit is configured to set a threshold for each object based on a precision distribution of the feature points generated for said object;
   a selecting unit (221) configured to select, for each object, the feature points having a higher precision than the threshold; and
   a generating unit (223) configured to generate an object shape by using the feature points that have been selected.

2. The image processing apparatus according to claim 1, further **characterized by**:

   a precision predicting unit (217) configured to predict the precision of the three-dimensional position based on a movement of the moving body, wherein
   the selecting unit (221) determines the feature points to be selected based also on a prediction result of the precision predicting unit.

3. The image processing apparatus according to claim 2, **characterized in that**
   the selecting unit (221) selects the feature points by using a common threshold, and
   selects the feature points by using the threshold set for each object, from among the feature points that have not been selected and whose precision is predicted to decrease from a present precision by the precision predicting unit.

4. The image processing apparatus according to any one of claims 1 through 3, further **characterized by**:

   a distance calculating unit (301) configured to obtain a feature point that is closest to the moving body among the feature points of each object, wherein
   the selecting unit (221) selects the feature points from among the feature points that are within a predetermined range from the feature point closest to the moving body.

5. The image processing apparatus according to any one of claims 1 through 4, further **characterized by**:

   a distance determining unit (401) configured to determine whether a distance from the moving body to the feature point of the object is greater than or equal to a threshold distance, based on the three-dimensional position, wherein
   the operations carried out by the precision calculating unit, distribution determining unit and selecting unit as defined in claim 1 are not carried out if the distance is greater than the threshold distance.

6. An image processing method.executed by a computer, the image processing method comprising :

   acquiring an image from a camera installed in a moving body;
   extracting feature points from the image;

performing a matching process on the feature points extracted from the images that have been taken at different time points;

calculating a three-dimensional position of each feature point that has been matched based on a position of the feature point that has been matched and a movement amount of the moving body;

calculating a precision indicating an error of the three-dimensional position;

detecting an object from the image based on a group of feature points whose three- dimensional positions have been calculated, **characterised by** setting a threshold for each object based on a precision distribution of the feature points generated for said object;

selecting, for each object, the feature points having a higher precision than the threshold; and

generating an object shape by using the feature points that have been selected.

7. A non-transitory computer-readable recording medium storing a program that causes a computer to execute a process comprising :

acquiring an image from a camera installed in a moving body;

extracting feature points from the image;

performing a matching process on the feature points extracted from the images that have been taken at different time points;

calculating a three-dimensional position of each feature point that has been matched based on a position of the feature point that has been matched and a movement amount of the moving body;

calculating a precision indicating an error of the three-dimensional position;

detecting an object from the image based on a group of feature points whose three-dimensional positions have been calculated, **characterised by** setting a threshold for each object based on a precision distribution of the feature points generated for said object;

selecting, for each object, the feature points having a higher precision than the threshold; and

generating an object shape by using the feature points that have been selected.

**Patentansprüche**

1. Bildverarbeitungsvorrichtung, aufweisend:

eine Bildakquirierungseinheit (201), die dazu eingerichtet ist, ein Bild von einer Kamera zu akquirieren, die in einem sich bewegenden Körper eingebaut ist;

eine Merkmalpunktextrahierungseinheit (203), die dazu eingerichtet ist, Merkmalpunkte aus dem Bild zu extrahieren;

eine Abgleicheinheit (207), die dazu eingerichtet ist, ein Abgleichverfahren an den Merkmalpunkten durchzuführen, die aus den Bildern extrahiert sind, die zu unterschiedlichen Zeitpunkten aufgenommen wurden;

eine Positionsberechnungseinheit (211), die dazu eingerichtet ist, eine dreidimensionale Position jedes Merkmalpunkts zu berechnen, die auf der Grundlage einer Position des Merkmalpunkts, der abgeglichen wurde, und eines Bewegungsbetrags des sich bewegenden Körpers abgeglichen wurde;

eine Genauigkeitsberechnungseinheit (215), die dazu eingerichtet ist, eine Genauigkeit zu berechnen, die einen Fehler der dreidimensionalen Position anzeigt;

eine Verteilungsbestimmungseinheit (219), die dazu eingerichtet ist, ein Objekt aus dem Bild auf der Grundlage einer Gruppe von Merkmalpunkten zu erfassen, deren dreidimensionale Positionen berechnet wurden, **dadurch gekennzeichnet, dass** die Verteilungseinheit dazu eingerichtet ist, einen Schwellwert für jedes Objekt auf der Grundlage einer Genauigkeitsverteilung der Merkmalpunkte einzustellen, die für das Objekt erzeugt sind;

eine Auswähleinheit (221), die dazu eingerichtet ist, für jedes Objekt die Merkmalpunkte auszuwählen, die eine höhere Genauigkeit als der Schwellwert aufweisen; und

eine Erzeugungseinheit (223), die dazu eingerichtet ist, eine Objektgestalt durch Verwenden der Merkmalpunkte zu erzeugen, die ausgewählt wurden.

2. Bildverarbeitungsvorrichtung nach Anspruch 1, ferner **gekennzeichnet durch**:

eine Genauigkeitsvorherberechnungseinheit (217), die dazu eingerichtet ist, die Genauigkeit der dreidimensionalen Position auf der Grundlage einer Bewegung des sich bewegenden Körpers vorherzuberechnen, wobei die Auswähleinheit (221) die Merkmalpunkte bestimmt, die auch auf der Grundlage eines Vorherberechnungsergebnisses der Genauigkeitsvorherberechnungseinheit auszuwählen sind.

**3.** Bildverarbeitungsvorrichtung nach Anspruch 2, **dadurch gekennzeichnet, dass**
die Auswähleinheit (221) die Merkmalpunkte unter Verwendung eines gemeinsamen Schwellwerts auswählt, und
die Merkmalpunkte unter Verwendung des Schwellwerts auswählt, der für jedes Objekt aus den Merkmalpunkten eingestellt ist, die nicht ausgewählt wurden, und für deren Genauigkeit durch die Genauigkeitsvorherberechnungseinheit vorherberechnet ist, dass sie ausgehend von einer aktuellen Genauigkeit abnimmt.

**4.** Bildverarbeitungsvorrichtung nach einem beliebigen der Ansprüche 1 bis 3, ferner **gekennzeichnet durch**:

> eine Abstandsberechnungseinheit (301), die dazu eingerichtet ist, einen Merkmalpunkt zu gewinnen, der unter den Merkmalpunkten jedes Objekts dem sich bewegenden Körper am nächsten ist, wobei
> die Auswähleinheit (221) die Merkmalpunkte unter den Merkmalpunkten auswählt, die sich innerhalb eines vorgegebenen Bereichs von dem Merkmalpunkt befinden, der dem sich bewegenden Körper am nächsten ist.

**5.** Bildverarbeitungsvorrichtung nach einem beliebigen der Ansprüche 1 bis 4, ferner **gekennzeichnet durch**:

> eine Abstandsbestimmungseinheit (401), die dazu eingerichtet ist, auf der Grundlage der dreidimensionalen Position zu ermitteln, ob ein Abstand von dem sich bewegenden Körper zu dem Merkmalpunkt des Objekts größer oder gleich einem Schwellwertabstand ist, wobei
> die Operationen, die **durch** die Genauigkeitsberechnungseinheit, Verteilungsbestimmungseinheit und Auswähleinheit nach Anspruch 1 ausgeführt werden, nicht ausgeführt werden, falls der Abstand den Schwellwertabstand überschreitet.

**6.** Bildverarbeitungsverfahren, das durch einen Computer ausgeführt wird, wobei das Bildverarbeitungsverfahren umfasst:

> Akquirieren eines Bildes von einer Kamera, die in einem sich bewegenden Körper eingebaut ist;
> Extrahieren von Merkmalpunkten aus dem Bild;
> Durchführen eines Abgleichverfahrens an den Merkmalpunkten, die aus den Bildern extrahiert sind, die zu unterschiedlichen Zeitpunkten aufgenommen wurden;
> Berechnen einer dreidimensionalen Position jedes Merkmalpunkts, der auf der Grundlage einer Position des Merkmalpunkts, der abgeglichen wurde, und eines Bewegungsbetrags des sich bewegenden Körpers abgeglichen wurde;
> Berechnen einer Genauigkeit, die einen Fehler der dreidimensionalen Position anzeigt;
> Erfassen eines Objekts aus dem Bild auf der Grundlage einer Gruppe von Merkmalpunkten, deren dreidimensionale Positionen berechnet wurden, **gekennzeichnet durch**:
>
>> Einstellen eines Schwellwerts für jedes Objekt auf der Grundlage einer Genauigkeitsverteilung der Merkmalpunkte, die für das Objekt erzeugt sind;
>> Auswählen der Merkmalpunkte, die eine höhere Genauigkeit als der Schwellwert aufweisen, für jedes Objekt; und
>
> Erzeugen einer Objektgestalt **durch** Verwenden der Merkmalpunkte, die ausgewählt wurden.

**7.** Nichtflüchtiges von einem Rechner lesbares Aufzeichnungsmedium, das ein Programm speichert, das einen Computer veranlasst, ein Verfahren auszuführen, das umfasst:

> Akquirieren eines Bildes von einer Kamera, die in einem sich bewegenden Körper eingebaut ist;
> Extrahieren von Merkmalpunkten aus dem Bild;
> Durchführen eines Abgleichverfahrens an den Merkmalpunkten, die aus den Bildern, die zu unterschiedlichen Zeitpunkten aufgenommen wurden, extrahiert sind;
> Berechnen einer dreidimensionalen Position jedes Merkmalpunkts, der auf der Grundlage einer Position des Merkmalpunkts, der abgeglichen wurde, und eines Bewegungsbetrags des sich bewegenden Körpers abgeglichen wurde;
> Berechnen einer Genauigkeit, die einen Fehler der dreidimensionalen Position anzeigt;
> Erfassen eines Objekts aus dem Bild auf der Grundlage einer Gruppe von Merkmalpunkten, deren dreidimensionale Positionen berechnet wurden, **gekennzeichnet durch**:

Einstellen eines Schwellwerts für jedes Objekt auf der Grundlage einer Genauigkeitsverteilung der Merkmalpunkte, die für das Objekt erzeugt sind;
Auswählen der Merkmalpunkte, die eine höhere Genauigkeit als der Schwellwert aufweisen, für jedes Objekt; und
Erzeugen einer Objektgestalt **durch** Verwenden der Merkmalpunkte, die ausgewählt wurden.

**Revendications**

1. Appareil de traitement d'image comprenant :

    une unité d'acquisition d'image (201) configurée pour acquérir une image à partir d'une caméra installée dans un corps en déplacement;
    une unité d'extraction de point caractéristique (203) configurée pour extraire des points caractéristiques à partir d'une image;
    une unité d'appariement (207) configurée pour exécuter un processus d'appariement sur les points caractéristiques extraits à partir des images qui ont été prises à différents moments ;
    une unité de calcul de position (211) configurée pour calculer une position tridimensionnelle de chaque point caractéristique qui a été apparié sur la base d'une position du point caractéristique qui a été apparié et d'une quantité de déplacement du corps en déplacement;
    une unité de calcul de précision (215) configurée pour calculer une précision indiquant une erreur de la position tridimensionnelle;
    une unité de détermination de distribution (219) configurée pour détecter un objet à partir de l'image sur la base d'un groupe de points caractéristiques dont les positions tridimensionnelles ont été calculées, **caractérisé en ce que** l'unité de distribution est configurée pour fixer un seuil pour chaque objet sur la base d'une distribution de précision des points caractéristiques produits pour ledit objet;
    une unité de sélection (221) configurée pour sélectionner, pour chaque objet, les points caractéristiques ayant une précision plus élevée que le seuil, et
    une unité génératrice (223) configurée pour produire une forme d'objet en utilisant les points caractéristiques qui ont été sélectionnés.

2. Appareil de traitement d'image selon la revendication 1, **caractérisé en outre par** :

    une unité de prédiction de précision (217) configurée pour prédire la précision de la position tridimensionnelle sur la base d'un déplacement du corps en déplacement, dans lequel
    l'unité de sélection (221) détermine les points caractéristiques devant être sélectionnées sur la base également d'un résultat de prédiction de l'unité de prédiction.

3. Appareil de traitement d'image selon la revendication 2, **caractérisé en ce que**

    l'unité de sélection (221) sélectionne les points caractéristiques en utilisant un seuil commun, et
    sélectionne les points caractéristiques en utilisant le seuil défini pour chaque objet, à partir des points caractéristiques qui n'ont pas été sélectionnés et dont la précision est prédite comme devant diminuer à partir d'une précision présente par l'unité de prédiction de précision.

4. Appareil de traitement d'image selon l'une quelconque des revendications 1 à 3, **caractérisé en outre par** :

    une unité de calcul de distance (301) configurée pour obtenir un point caractéristique qui est le plus proche du corps en déplacement parmi les points caractéristiques de chaque objet, dans lequel
    l'unité de sélection (221) sélectionne les points caractéristiques à partir des points caractéristiques qui sont à l'intérieur d'une plage prédéterminée à partir du point caractéristique le plus proche du corps en déplacement.

5. Appareil de traitement d'image selon l'une quelconque des revendications 1 à 4, **caractérisé en outre par** :

    une unité de détermination de distance (401) configurée pour déterminer si une distance à partir du corps en déplacement jusqu'au point caractéristique de l'objet est supérieure ou égale à une distance seuil, sur la base de la position tridimensionnelle, dans lequel
    les opérations effectuées par l'unité de calcul de précision, l'unité de détermination de distribution et l'unité de sélection telles que définies dans la revendication 1 ne sont pas effectuées si la distance est supérieure à la distance seuil.

**6.** Procédé de traitement d'image, exécuté par un ordinateur, le procédé de traitement d'image comprenant :

acquérir une image à partir d'une caméra installée dans un corps en déplacement;
extraire des points caractéristiques à partir de l'image ;
effectuer un processus d'appariement sur les points caractéristiques extraits à partir des images qui ont été prises à différents moments ;
calculer une position tridimensionnelle de chaque point caractéristique qui a été apparié sur la base d'une position du point caractéristique qui a été apparié et d'une quantité de déplacement du corps en déplacement;
calculer une précision indiquant une erreur de la position tridimensionnelle;
détecter un objet à partir de l'image sur la base d'un groupe de points caractéristiques dont les positions tridimensionnelles one été calculées, **caractérisé par** la fixation d'un seuil pour chaque objet sur la base d'une distribution de précision des points caractéristiques produits pour ledit objet ;
sélectionner, pour chaque objet, les points caractéristiques ayant une précision plus élevée que le seuil ; et
produire une forme d'objet en utilisant les points caractéristiques qui ont été sélectionnés.

**7.** Support d'enregistrement non transitoire lisible par ordinateur stockant un programme qui conduit un ordinateur à exécuter un procédé comprenant :

acquérir une image à partir d'une caméra installée dans un corps en déplacement;
extraire des points caractéristiques à partir de l'image ;
effectuer un processus d'appariement sur les points caractéristiques extraits à partir des images qui ont été prises à différents moments ;
calculer une position tridimensionnelle de chaque point caractéristique qui a été apparié sur la base d'une position du point caractéristique qui a été apparié et d'une quantité de déplacement du corps en déplacement;
calculer une précision indiquant une erreur de la position tridimensionnelle ;
détecter un objet à partir de l'image sur la base d'un groupe de points caractéristiques dont les positions tridimensionnelles ont été calculées, **caractérisé par** la fixation d'un seuil pour chaque objet sur la base d'une distribution de précision des points caractéristiques produits pour ledit objet ;
sélectionner, pour chaque objet, les points caractéristiques ayant une précision plus élevée que le seuil ; et
produire une forme d'objet en utilisant les points caractéristiques qui ont été sélectionnés.

# FIG.1

OBJECT B

PARKING SPACE

20

5

OBJECT A

# FIG.2

(1), (2) CALCULATION RESULT
OF THREE-DIMENSIONAL
POSITIONS OF FEATURE POINT

(3) SELECTION
RESULT OF HIGH
PRECISION POINTS

(4) RESULT OF
GENERATING SHAPE

PRECISION OF FEATURE POINT

THRESHOLD ── ○ HIGH ↑← ── USED FOR
FORMING SHAPE
◎ MODERATE
● LOW

EP 2 738 740 B1

# FIG.3

OBJECT B

OBJECT A

d2

d1

20

5

# FIG.4

INCOMPLETE
OBJECT SHAPE

OBJECT B

OBJECT A

OBJECT B

OBJECT A

OBJECT B

OBJECT A

(1), (2) CALCULATION
RESULT OF
THREE-DIMENSIONAL
POSITIONS

(3) SELECTION
RESULT OF HIGH
PRECISION POINTS

(4) RESULT OF
GENERATING SHAPE

PRECISION OF FEATURE POINT

THRESHOLD ─── ○ HIGH ◄─── USED FOR
FORMING SHAPE

◉ MODERATE

● LOW

EP 2 738 740 B1

# FIG.5

(1), (2) CALCULATION
RESULT OF
THREE-DIMENSIONAL
POSITIONS

(3) SELECTION
RESULT OF HIGH
PRECISION POINTS

DECREASE IN SHAPE
PRECISION AT INITIAL STAGE

(4) RESULT OF
GENERATING SHAPE

DECREASE IN PRECISION
OF OVERALL SHAPE

OBJECT B

OBJECT A

PRECISION OF FEATURE POINT

O   HIGH
⊗   MODERATE          USED FOR
                      FORMING SHAPE
THRESHOLD
●   LOW

FIG.6

EP 2 738 740 B1

# FIG.7

EP 2 738 740 B1

# FIG.8

| INFORMATION | PARAMETER |
|---|---|
| FEATURE POINT POSITION (PRESENT) | nx,ny |
| FEATURE POINT POSITION (PAST) | rx,ry |
| PATTERN INFORMATION CENTERING AROUND THE FEATURE POINT POSITION | pow[RY][RX] |
| FLAG INDICATING WHETHER MATCHING PROCESS IS SUCCESSFUL/UNSUCCESSFUL | flag |
| THREE-DIMENSIONAL POSITION | px,py,pz |
| ERROR OF THREE-DIMENSIONAL POSITION | err |
| DECREASE | deg |
| LABEL | lbl |
| IN-OBJECT NUMBER | num |
| OUTPUT | out |

EP 2 738 740 B1

# FIG.9

START FEATURE POINT
EXTRACTING PROCESS

S101

EDGE PROCESS

S102

EDGE
INTENSITY GREATER
THAN OR EQUAL TO
THRESHOLD
?

NO

YES

S103

CREATE ELEMENT e[i] HAVING FOLLOWING
INFORMATION IN EDGE LIST (list_edge),
AND ADD TO EDGE LIST
·FEATURE POINT POSITION (nx, ny)
·SURROUNDING PATTERN INFORMATION
·SET FLAG (flag) AS "0"
UPDATE NUMBER OF ELEMENTS (Ne=Ne+1)

S104

EDGE
PROCESS ENDED FOR
ALL PIXELS?

NO

YES

END FEATURE POINT
EXTRACTING PROCESS

# FIG.10

| INFORMATION | PARAMETER |
|---|---|
| IMAGE POSITION | rx,ry |
| EDGE INTENSITY | pow |
| THREE-DIMENSIONAL POSITION | px,py,pz |
| ERROR OF THREE-DIMENSIONAL POSITION | err |

FIG.11

$$\text{( START MATCHING PROCESS )}$$

S201

UNPROCESSED ELEMENT IN
REGISTERED LIST (list_reg)? — NO

YES ↓ S202

EXTRACT UNPROCESSED ELEMENT r[i]

S203

UNPROCESSED ELEMENT
IN EDGE LIST (list_edge)? — NO

YES ↓ S204

EXTRACT UNPROCESSED ELEMENT e[j]

S205

MATCHING PROCESS ON r[i] AND e[j]

S206

NO — MATCHING SUCCESSFUL?

· YES ↓ S207

REGISTER FOLLOWING VALUES OF r[i] IN e[j]
·IMAGE POSITION (rx, ry)
·THREE-DIMENSIONAL POSITION (px, py, pz)
·ERROR OF THREE-DIMENSIONAL POSITION (err)

S208

SET FLAG (flag) OF e[j] TO "1"

S209

DELETE ELEMENT r[i] FROM
REGISTERED LIST (list_reg)
UPDATE NUMBER OF ELEMENTS (Nr=Nr-1)

$$\text{( END MATCHING PROCESS )}$$

FIG.12A

FIG.12B

# FIG.13

OBJECT POINT

l1

l2

a1

a2

T

TIME (n−1)
CAMERA POSITION

TIME (n)
CAMERA POSITION

# FIG.14

START PROCESS

S301

NO ← UNPROCESSED ELEMENT
IN EDGE LIST (list_edge)?

YES

S302

EXTRACT UNPROCESSED ELEMENT e[i]

S303

MATCHING PROCESS
SUCCESSFUL (flag OF e[i] IS "1")
? → NO

YES

S304

CALCULATION PROCESS OF THREE-
DIMENSIONAL POSITION (Px, Py, Pz) OF e[i]

S305

CALCULATION PROCESS OF ERROR (l2 err)
OF THREE-DIMENSIONAL POSITION OF e[i]

S306

l2 err LESS THAN
ERROR (err) OF e[i]? → NO

YES

S307

UPDATE FOLLOWING VALUES OF ELEMENT e[i]
・THREE-DIMENSIONAL POSITION (px=Px, py= Py, pz=Pz)
・ERROR OF THREE-DIMENSIONAL POSITION (err=l2 err)

END PROCESS

38

```
      ( START PROCESS OF REGISTERING FEATURE POINTS )
                              │
                              ▼
                      ╱────────────╲  S401
                     ╱  IS THERE     ╲
           NO       ╱ UNPROCESSED     ╲
          ◄────────⟨  ELEMENT IN       ⟩
                    ╲ EDGE LIST        ╱
                     ╲ (list_edge)?   ╱
                      ╲──────────────╱
                           │ YES
                           ▼          S402
                  ┌────────────────────┐
                  │ EXTRACT UNPROCESSED│
                  │   ELEMENT e[i]     │
                  └────────────────────┘
                           │
                           ▼          S403
                      ╱──────────╲
                     ╱            ╲       NO
                    ⟨ FLAG OF e[i] ⟩──────────────┐
                     ╲ IS "1"?    ╱                │
                      ╲──────────╱                 │
                           │ YES                    │
                           ▼   S404                 ▼   S405
```

| S404 | S405 |
|------|------|
| CREATE ELEMENT r[j] THAT HAS TAKEN OVER FOLLOWING VALUES OF e[i] IN REGISTERED LIST (list_reg), AND ADD TO LIST<br>·IMAGE POSITION (rx, ry)<br>·FEATURE POINT PATTERN<br>·THREE-DIMENSIONAL POSITION (px, py, pz)<br>·ERROR OF THREE-DIMENSIONAL POSITION (err)<br>UPDATE NUMBER OF ELEMENTS (Nr=Nr+1) | CREATE ELEMENT r[j] THAT HAS TAKEN OVER FOLLOWING VALUES OF e[i] IN REGISTERED LIST (list_reg), AND ADD TO LIST<br>·IMAGE POSITION (rx, ry)<br>·FEATURE POINT PATTERN<br>UPDATE NUMBER OF ELEMENTS (Nr=Nr+1) |

```
      ( END PROCESS OF REGISTERING FEATURE POINTS )
```

FIG.15

FIG.16

FIG.17

**FIG.18**

START PRECISION PREDICTION
PROCESS OF FEATURE POINT

S501

PROCESS OF PREDICTING
MOVEMENT DIRECTION OF VEHICLE

S502

UNPROCESSED ELEMENT
IN EDGE LIST (list_edge)?    NO

YES    S503

EXTRACT UNPROCESSED ELEMENT e[i]

S504

FLAG (flag) OF e[i] IS "1"?    NO

YES    S505

PREDICTION PROCESS (err2)
OF ERROR OF e[i]

S506

err2 GREATER THAN
ERROR (err) OF e[i]?    NO

YES    S507

UPDATE DECREASE (deg) OF e[i] TO "1"

END PRECISION PREDICTION
PROCESS OF FEATURE POINT

# FIG.19

START PRECISION
DISTRIBUTION DETERMINING
PROCESS OF FEATURE POINT

S601

PROCESS OF APPLYING
INITIAL LABEL VALUE
TO FEATURE POINT

S602

ORGANIZING
PROCESS ON
LABEL NUMBERS

S603

DETERMINATION
PROCESS OF
OBJECT NUMBER

S604

PROCESS OF DETERMINING
SELECTION THRESHOLD
FOR EACH OBJECT

END PRECISION
DISTRIBUTION DETERMINING
PROCESS OF FEATURE POINT

# FIG.20

START PROCESS OF APPLYING INITIAL LABEL VALUE

S701
CREATE COPY (list_edge2) OF EDGE LIST (list_edge)

S702
UNPROCESSED ELEMENT IN EDGE LIST (list_edge)? —NO→ END PROCESS OF APPLYING INITIAL LABEL VALUE

YES ↓

S703
EXTRACT UNPROCESSED ELEMENT e[i]

S704
FLAG (flag) OF e[i] IS "1"? —NO

YES ↓

S705
ASSIGN LABEL (lbl) OF e[i] IN lbl1
lbl1=lbl

S706
UNPROCESSED ELEMENT IN EDGE LIST (list_edge2)? —NO

YES ↓

S707
EXTRACT UNPROCESSED ELEMENT e[j]

S708
FLAG OF e[j] IS "1"? —NO→

YES ↓

S709
ASSIGN LABEL (lbl) OF e[j] IN lbl2
lbl2=lbl

S710
DISTANCE OF e[i] AND e[j] CLOSE? —NO→

YES ↓

S711
LABEL NUMBER OF e[j] lbl2>0? —NO→ S712 ASSIGN LABEL (lbl) OF e[j] lbl=lbl1

YES ↓

S713
lbl1!=lbl2? —NO→

YES ↓

S714
lbl1<lbl2? —NO→

YES ↓

S715
SET CONNECTION DESTINATION jump[lbl2]=lbl1

S716
SET CONNECTION DESTINATION jump[lbl1]=lbl2

## FIG.21

EP 2 738 740 B1

| INFORMATION | PARAMETER |
|---|---|
| CONNECTION DESTINATION | num |

# FIG.22

START LABEL NUMBER
ORGANIZATION PROCESS

S801

UNPROCESSED
ELEMENT IN CONNECTION
DESTINATION
LIST (list_jump)?

NO

YES

S802

EXTRACT UNPROCESSED
ELEMENT jump[i],
AND SET NUMBER (j)
USED FOR SEARCHING
j=i

S804

REASSIGN
CONNECTION DESTINATION
j=jump[ j]

S803

SEARCH
NUMBER AND
CONNECTION DESTINATION
THE SAME
jump[ j]= j?

NO

YES

S805

DETERMINE FINAL
CONNECTION DESTINATION
jump2[i]=j

END LABEL NUMBER
ORGANIZATION PROCESS

# FIG.23

| INFORMATION | PARAMETER |
|---|---|
| FINAL CONNECTION DESTINATION | num |

EP 2 738 740 B1

**FIG.24**

```
        ┌─────────────────────────────┐
        │   START OBJECT NUMBER       │
        │   DETERMINING PROCESS       │
        └─────────────────────────────┘
                     │
                     ▼
                  ◇ S901
        UNPROCESSED ELEMENT IN THE
NO ◄──  EDGE LIST (list_edge)?
        │ YES
        ▼
        ┌─────────────────────────────┐  S902
        │   EXTRACT UNPROCESSED       │
        │   ELEMENT e[i]              │
        └─────────────────────────────┘
                     │
                     ▼
                  ◇ S903
        FLAG OF e[i] IS "1"?  ──► NO
        │ YES
        ▼
        ┌─────────────────────────────┐  S904
        │  EXTRACT OBJECT NUMBER      │
        │  OF FINAL CONNECTION        │
        │  DESTINATION FROM           │
        │  LABEL NUMBER (lbl) OF e[i] │
        └─────────────────────────────┘
                     │
                     ▼
        ┌─────────────────────────────┐  S905
        │ SET FOLLOWING VALUES IN     │
        │ o[obj_num] [No] OF OBJECT   │
        │ LIST (list_object)          │
        │ ·THREE-DIMENSIONAL          │
        │  POSITION (px, py, pz)      │
        │ ·ERROR OF THREE-DIMENSIONAL │
        │  POSITION (err)             │
        │ UPDATE NUMBER OF ELEMENTS   │
        │ (No=No+1)                   │
        └─────────────────────────────┘
                     │
                     ▼
        ┌─────────────────────────────┐  S906
        │   UPDATE FOLLOWING          │
        │   VALUE OF e[i]             │
        │   lbl=obj_num               │
        │   num=No                    │
        └─────────────────────────────┘
                     │
                     ▼
        ┌─────────────────────────────┐
        │   END OBJECT NUMBER         │
        │   DETERMINING PROCESS       │
        └─────────────────────────────┘
```

# FIG.25

| INFORMATION | PARAMETER |
|---|---|
| THREE-DIMENSIONAL POSITION | px,py,pz |
| ERROR OF THREE-DIMENSIONAL POSITION | err |

EP 2 738 740 B1

**FIG.26**

```
     ┌──────────────────────┐
     │  START SELECTION     │
     │  THRESHOLD SETTING   │
     │  PROCESS             │
     └──────────────────────┘
                │
                ▼  S1001
        ◇ UNPROCESSED
NO ◄────  ELEMENT IN OBJECT LIST
        (list_object)?
                │ YES
                ▼  S1002
     ┌──────────────────────┐
     │ EXTRACT UNPROCESSED  │
     │ ELEMENT o[i]         │
     └──────────────────────┘
                │
                ▼  S1003
     ┌──────────────────────┐
     │ INITIALIZE HISTOGRAM │
     │ LIST (list_hist) AND │
     │ ACCUMULATED VALUE OF │
     │ ERRORS (sum)         │
     └──────────────────────┘
                │
                ▼  S1004
        ◇ UNPROCESSED
        ELEMENT IN OBJECT ──── NO ──►
        NUMBER o[i]?
                │ YES   S1005
     ┌──────────────────────┐
     │ EXTRACT UNPROCESSED  │
     │ ELEMENT o[i][j]      │
     └──────────────────────┘
                │
                ▼  S1006
     ┌──────────────────────┐
     │ UPDATE h[err] FROM   │
     │ ERROR (err) OF o[i][j]│
     │ h[err]=h[err]+1      │
     └──────────────────────┘

     ┌──────────────────────┐
     │  END SELECTION       │
     │  THRESHOLD SETTING   │
     │  PROCESS             │
     └──────────────────────┘
```

Right branch:

```
                ▼  S1007
        ◇ UNPROCESSED
        ELEMENT IN HISTOGRAM ──── NO ──►
        LIST?
                │ YES   S1008
     ┌──────────────────────┐
     │ EXTRACT UNPROCESSED  │
     │ ELEMENT h[k]         │
     └──────────────────────┘
                │
                ▼  S1009
     ┌──────────────────────┐
     │ CALCULATE ACCUMULATED│
     │ VALUE OF ERRORS      │
     │ sum=sum+h[k]         │
     └──────────────────────┘
                │
                ▼  S1010
        ◇ ACCUMULATED
NO ◄──── VALUE GREATER
        THAN OR EQUAL TO
        THRESHOLD
        sum≥th?
                │ YES
                ▼  S1011
     ┌──────────────────────┐
     │ CREATE NEW SELECTION │
     │ THRESHOLD LIST       │
     │ (list_thresh),       │
     │ AND UPDATE t[i]      │
     │ t[i]=k               │
     └──────────────────────┘
```

## FIG.27

| INFORMATION | PARAMETER |
|---|---|
| COUNT | cut |

## FIG.28

| INFORMATION | PARAMETER |
|---|---|
| ERROR THRESHOLD | err |

# FIG.29

```
( START FEATURE POINT SELECTING PROCESS )
```

S1101 — UNPROCESSED ELEMENT IN EDGE LIST (list_edge) ?

NO

YES ↓ S1102

EXTRACT UNPROCESSED ELEMENT e[i]

S1103 — FLAG (flag) OF e[i] IS "1"?

NO

YES ↓ S1104

EXTRACT IN-OBJECT NUMBER (num) OF e[i], AND EXTRACT t[num] FROM SELECTION THRESHOLD LIST (list_thresh)

S1105 — IS ERROR (err) OF e[i] LESS THAN OR EQUAL TO THRESHOLD?

NO

YES

S1106 — DECREASE (deg) OF e[i] IS "1"?

NO

YES ↓

S1107 — ERROR (err) OF e[i] IS LESS THAN t[num]?

NO

YES

SET OUTPUT (out) OF e[i] TO "1" — S1108

```
( END FEATURE POINT SELECTING PROCESS )
```

# FIG.30

# FIG.31

| INFORMATION | PARAMETER |
|---|---|
| THREE-DIMENSIONAL POSITION | px,py,pz |
| ERROR OF THREE-DIMENSIONAL POSITION | err |
| NEAR | near |

EP 2 738 740 B1

**FIG.32**

START DISTANCE CALCULATING PROCESS FOR EACH OBJECT

S1201 — UNPROCESSED ELEMENT IN OBJECT LIST (list_object)?

NO →

YES ↓

S1202 — EXTRACT UNPROCESSED ELEMENT o[i]

S1203 — INITIALIZE MINIMUM DISTANCE (min_dist)

S1204 — UNPROCESSED ELEMENT IN OBJECT NUMBER o[i]?

NO → S1209 — RESET PROCESSED/UNPROCESSED OF ELEMENT o[i]

YES ↓

S1205 — EXTRACT UNPROCESSED ELEMENT o[i][j]

S1206 — CALCULATE DISTANCE (dist) TO MOVING BODY

S1207 — dist<min_dist?

NO →

YES ↓

S1208 — ·UPDATE MINIMUM DISTANCE min_dist=dist ·UPDATE NEAREST FEATURE POINT min_num=i

END DISTANCE CALCULATING PROCESS FOR EACH OBJECT

S1210 — UNPROCESSED ELEMENT IN OBJECT NUMBER o[i]?

NO →

YES ↓

S1211 — EXTRACT UNPROCESSED ELEMENT o[i][j]

S1212 — CALCULATE DISTANCE (dist2) FROM o[i][j] TO NEAREST FEATURE POINT

S1213 — dist2 LESS THAN OR EQUAL TO THRESHOLD?

NO →

YES ↓

S1214 — SET (near) OF ELEMENT o[i][j] TO "1"

# FIG.33

( START FEATURE POINT SELECTING PROCESS )

S1301
UNPROCESSED
ELEMENT IN EDGE LIST
(list_edge)
? — NO

YES

S1302
EXTRACT UNPROCESSED
ELEMENT e[i]

S1303
FLAG
OF e[i] IS "1"
? — NO

YES

S1304
EXTRACT IN-OBJECT
NUMBER (num) OF e[i],
AND EXTRACT t[num] FROM
SELECTION THRESHOLD
LIST (list_thresh)

S1305
IS ERROR (err)
OF e[i] LESS THAN OR EQUAL
TO THRESHOLD? — NO

YES

S1306
EXTRACT LABEL (lbl) AND IN-
OBJECT NUMBER (num) FROM e[i]

S1307
NEAR
(near) OF o[lbl][num]
IS "1"? — NO

YES

S1308
DECREASE
(deg) OF e[i] IS
"1"? — NO

YES

S1309
ERROR (err)
OF e[i] IS LESS THAN
t[num]? — NO

YES

S1310
SET OUTPUT (out) OF e[i] TO "1"

( END FEATURE POINT SELECTING PROCESS )

# FIG.34

EP 2 738 740 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007322357 A

**Non-patent literature cited in the description**

- **K. FINTZEL et al.** 3D Parking Assistant System. *2004 IEEE Intelligent vehicles symposium,* 14 June 2004, 881-886